# EUROPEAN PATENT SPECIFICATION

(11) **EP 3 964 431 B1**
(45) Date of publication and mention of the grant of the patent: **04.10.2023**
(21) Application number: 21191760.4
(22) Date of filing: 17.08.2021
(51) Int. Cl.: B62J 1/14, B62K 11/04, B62J 25/08

(54) **STRADDLED VEHICLE**
GRÄTSCHSITZFAHRZEUG
VÉHICULE À ENFOURCHER

(30) Priority: 04.09.2020 JP 2020148976
(43) Date of publication of application: 09.03.2022
(73) Proprietor: Yamaha Hatsudoki Kabushiki Kaisha, Iwata-shi, Shizuoka-ken 438-8501 (JP)
(72) Inventor: SUGAWARA, Kohei, Shizuoka, 438-8501 (JP)
(74) Representative: Marks & Clerk LLP

(56) References cited:
- EP-A2- 2 574 534
- CN-C- 100 374 345
- JP-A- H10 236 358
- JP-A- 2015 134 572
- JP-A- 2019 031 229

## Description

### FIELD OF INVENTION

The present invention relates generally to a straddled vehicle, and in particular, though not exclusively, to a straddled vehicle provided with or having a rear grip.

### SUMMARY OF INVENTION

Japanese Unexamined Patent Publication No. 2019-31229A (SUZUKI MOTOR CORP) discloses a straddled vehicle. Hereinunder, numerals in Japanese Unexamined Patent Publication No. 2019-31229A are expressed in parentheses. The straddled vehicle includes a pair of seat rails (3) and a bridge member (6). The bridge member (6) couples rear ends of the paired seat rails (3). The bridge member (6) extends in a transverse direction of the vehicle across the paired seat rails (3).

The straddled vehicle includes a rear grip (21). The rear grip (21) includes a pair of fixing portions (23). The paired fixing portions (23) are connected to the bridge member (6). The rear grip (21) includes a gripper (22). The gripper (22) extends rearward from the right fixing portion (23), and extends rearward from the left fixing portion (23). Moreover, the rear grip (21) includes a bulge (26). The bulge (26) couples the right fixing portion (23) to the left fixing portion (23). The bulge (26) extends across the paired seat rails (3) in the transverse direction of the vehicle. Specifically, the bulge (26) is curved so as to bulge rearward.

The straddled vehicle includes a seat (12). The seat (12) is located above the paired seat rails (3). The seat (12) is placed on the paired fixing portions (23) and the bulge (26).

The bridge member (6) and the bulge (26) are each located below the seat (12). The bridge member (6) and the bulge (26) each extend between the paired seat rails (3) in the transverse direction of the vehicle. Accordingly, it is hard to use a space below the seat (12) easily. For example, it is hard to use the space below the seat (12) as a cargo room for storing the belongings of a rider of the straddled vehicle. For example, the bridge member (6) and the bulge (26) prevent the rider from taking the rider's belongings in and out of the space below the seat (12).

This invention has been made regarding the state of the art noted above, and an object of at least one embodiment of at least one aspect may be to seek provide a straddled vehicle in which an easily available space can be formed below a seat.

The present Inventor studied that a rear grip is directly connected to a seat frame. With such a configuration, a bridge member is omittable. Accordingly, an easily available space can be formed below the seat. On the other hand, the Inventor found that the configuration possesses another drawback. Specifically, when the rear grip is directly connected to the seat frame, the rear grip is low in height position. Accordingly, the seat is also low in height position. Consequently, it is hard to form a large space below the seat. That is, it is difficult to make the easily available space sufficiently large.

Next, the Inventor studied for changing arrangement of the bridge member. For example, the Inventor studied that the bridge member is positioned so as not overlap the seat in plan view of the vehicle. With such a configuration, the bridge member never prevents formation of an easily available space below the seat. On the other hand, the Inventor found that the configuration possesses another drawback. Specifically, the bridge member cannot support the rear grip rigidly when the bridge member is positioned so as not overlap the seat in plan view of the vehicle.

Then, in addition to forming the easily available space below the seat, the Inventor further studied for making the easily available space below the seat sufficiently large and supporting the rear grip rigidly.

It is an object of at least one embodiment of at least one aspect of the present invention to seek to obviate or at least mitigate one or more problems and/or disadvantages in the prior art.

EP2574534 A2 (HONDA MOTOR CO LTD) describes a saddle type vehicle including a pair of left and right seat rails for supporting a tandem type rider seat, a pair of left and right passenger grips attached to the left and right seat rails so as to be gripped by a pillion passenger seated on a rear portion of the rider seat, and a carrier disposed rearwardly of the rider seat so as to load luggage thereon, to provide the vehicle with such passenger grips, and that the pillion passenger can grip the passenger grips appropriately. The carrier is detachably attached to the pair of left and right passenger grips. EP2574534 A2 discloses the following features of claim 1: a straddled vehicle comprising:a right seat frame;a left seat frame located more leftward than the right seat frame;a seat located above the right seat frame and the left seat frame;a stay supported by the right seat frame and the left seat frame; and a rear grip supported by the stay;the stay comprising:a first stay located behind the seat in plan view of the vehicle and connected to the right seat frame;a second stay located behind the seat in plan view of the vehicle and connected to the left seat frame;a third stay located in front of the first stay in plan view of the vehicle and connected to the right seat frame; and a fourth stay located in front of the second stay in plan view of the vehicle and connected to the left seat frame;the third stay and the fourth stay being separated from each other,the rear grip comprising:a right grip portion located rightward of the right seat frame and the seat in plan view of the vehicle and extending in a longitudinal direction of the vehicle;a left grip portion located leftward of the left seat frame and the seat in plan view of the vehicle and extending in the longitudinal direction of the vehicle;a coupling portion located behind the seat in plan view of the vehicle, extending from a rear end of the right grip portion to a rear end of the left grip portion in a transverse direction of the vehicle, connected to the first stay and the second stay, and coupling the right seat frame to the left seat frame via the first stay and the second stay;a right leg portion extending from a front end of the right grip portion to the third stay and connected to the third stay; and a left leg portion extending from a front end of the left grip portion to the fourth stay and connected to the fourth stay;the coupling portion overlapping the right seat frame and the left seat frame in plan view of the vehicle, and the rear grip forming an inner space configured to contact a left edge of the right grip portion, a right edge of the left grip portion, and a front edge of the coupling portion in plan view of the vehicle, and to open forward of the rear grip.

### SUMMARY OF INVENTION

Various aspects of the present invention are defined in the independent claim(s) appended hereto. Some optional and/or preferred features are defined in the dependent claims appended hereto.

According to one aspect of the present invention there is provided a straddled vehicle according to appended claim 1.

In claim 1 the first stay and the second stay are located behind the seat in plan view of the vehicle. Accordingly, the first stay and the second stay are located outside the space below the seat. Specifically, the first stay and the second stay are located more rearward than the space below the seat. Consequently, the first stay and the second stay do not prevent usage of the space below the seat.

As described above, with the straddled vehicle according to appended claim 1, an easily available space can be formed below the seat. Moreover, the easily available space below the seat can suitably have a sufficiently large size. Moreover, the rear grip can be supported rigidly.

It is preferred in the straddled vehicle described above that the third stay may extend upward from the right seat frame, the fourth stay may extend upward from the left seat frame, and/or a separation distance between the third stay and/or the fourth stay in the transverse direction of the vehicle may be approximately or substantially equal to a separation distance between the right seat frame and the left seat frame in the transverse direction of the vehicle. The third stay and the fourth stay may hardly prevent or inhibit usage of the space below the seat.

It is preferred in the straddled vehicle described above that a separation distance between the right leg portion and the left leg portion in the transverse direction of the vehicle may be approximately equal to the separation distance between the right seat frame and the left seat frame in the transverse direction of the vehicle. The right leg portion and the left leg portion may hardly prevent or inhibit usage of the space below the seat.

It is preferred in the straddled vehicle described above that the first stay and the second stay may be separated from each other, the first stay may extend upward from the right seat frame, the second stay may extend upward from the left seat frame, and/or a separation distance between the first stay and the second stay in the transverse direction of the vehicle is approximately equal to the separation distance between the right seat frame and the left seat frame in the transverse direction of the vehicle. The first stay and the second stay may be separated from each other. That is, the stay may have no part extending from the first stay to the second stay in the transverse direction of the vehicle. Consequently, the first stay and the second stay may hardly prevent or inhibit usage of the space below the coupling portion. Moreover, the separation distance between the first stay and the second stay in the transverse direction of the vehicle may be approximately or substantially equal to the separation distance between the right seat frame and the left seat frame in the transverse direction of the vehicle. Accordingly, the first stay and the second stay may hardly prevent or inhibit usage of the space below the coupling portion.

It is preferred in the straddled vehicle described above that the coupling portion may be of a flat plate shape extending in the transverse direction of the vehicle. This can enhance rigidity of the coupling portion easily. Consequently, the coupling portion can support the right grip portion and the left grip portion more rigidly.

It is preferred in the straddled vehicle described above that the seat may comprise a front seat and/or a rear seat located behind the front seat, the rear seat may be separate from the front seat, and/or the rear grip may comprise a position regulator configured to contact the rear seat to regulate upward movement of the rear seat relative to the rear grip. The seat may comprise the front seat and the rear seat. The rear seat may be separate from the front seat. Consequently, the space below the seat can be used easily. The rear grip may comprise the position regulator. The position regulator may contact the rear seat. The position regulator may regulate upward movement of the rear seat relative to the rear grip. Accordingly, the rear grip can keep the rear seat at a proper position.

It is preferred in the straddled vehicle described above that the position regulator may be located higher than the right leg portion and the left leg portion. The position regulator may be located at a relatively high position. Consequently, the position regulator may hardly prevent or inhibit usage of the space below the seat.

It is preferred in the straddled vehicle described above that the position regulator may be supported while being suspended from the coupling portion, and/or the coupling portion may be located higher than the position regulator. The rear grip may hardly prevent or inhibit usage of the space below the seat.

It is preferred in the straddled vehicle described above that the rear seat may comprise a lower engaging portion located below the position regulator and/or configured to contact the position regulator. The position regulator may regulate movement of the lower engaging portion to a position higher than the position regulator. Consequently, the position regulator may suitably regulate upward movement of the rear seat relative to the rear grip.

It is preferred in the straddled vehicle described above that at least either the lower engaging portion or the position regulator may comprise a blocking portion configured to prevent the lower engaging portion from being located above the position regulator. An accurate position of the lower engaging portion may be below the position regulator. A position above the position regulator may be an inaccurate position for the lower engaging portion. The blocking portion may prevent the lower engaging portion from being located at the inaccurate position. Consequently, the lower engaging portion can always contact the position regulator at the accurate position.

It is preferred in the straddled vehicle described above that the rear seat may comprise a first load transmitting portion which may be located above the right seat frame and configured to contact the right seat frame to transmit load to the right seat frame, and/or a second load transmitting portion which may be located above the left seat frame and/or may be configured to contact the left seat frame to transmit load to the left seat frame, and/or the lower engaging portion may be located higher than a lower end of the first load transmitting portion and a lower end of the second load transmitting portion. The rear seat may comprise the first load transmitting portion and the second load transmitting portion. The first load transmitting portion may be located above the right seat frame. The first load transmitting portion may contact the right seat frame. Accordingly, the first load transmitting portion can transmit load of the rear seat to the right seat frame. The second load transmitting portion may be located above the left seat frame. The second load transmitting portion may contact the left seat frame. Accordingly, the second load transmitting portion can transmit load of the rear seat to the left seat frame. The lower engaging portion may be located higher than the lower end of the first load transmitting portion and/or the lower end of the second load transmitting portion. As described above, the lower engaging portion may be located at a relatively high position. Consequently, a sufficiently large size of the easily available space below the rear seat can be obtained suitably.

It is preferred in the straddled vehicle described above that the position regulator may comprise a first position regulator and/or a second position regulator optionally located leftward of the first position regulator, and/or the lower engaging portion may comprise a first lower engaging portion configured to contact the first position regulator, and/or a second lower engaging portion located leftward of the first lower engaging portion and/or configured to contact the second position regulator. The position regulator may comprise the first position regulator and the second position regulator. The lower engaging portion may comprise the first lower engaging portion and/or the second lower engaging portion. The first lower engaging portion may contact the first position regulator. The second lower engaging portion may contact the second position regulator. Here, the second position regulator may be located leftward of the first position regulator. The second lower engaging portion may be located leftward of the first lower engaging portion. Consequently, the position regulator can appropriately regulate upward movement of the rear seat relative to the rear grip.

It is preferred in the straddled vehicle described above that the rear seat may comprise a hook, the straddled vehicle may further comprise a locking mechanism configured to lock the hook, the hook may be located more leftward and more forward than the first lower engaging portion, and/or the hook may be located more rightward and/or more forward than the second lower engaging portion. The locking mechanism, the first position regulator, and/or the second position regulator can hold the rear seat suitably.

It is preferred in the straddled vehicle described above that the rear seat may comprise a third load transmitting portion located rightward of the hook in bottom view of the vehicle, and/or a fourth load transmitting portion located leftward of the hook in bottom view of the vehicle, the third load transmitting portion, the hook, and the fourth load transmitting portion optionally being lined-up in the transverse direction of the vehicle in bottom view of the vehicle, the straddled vehicle optionally further comprising a bracket located below the third load transmitting portion and/or the fourth load transmitting portion, and/or configured to contact the third load transmitting portion and/or the fourth load transmitting portion. The rear seat may comprise the third load transmitting portion and/or the fourth load transmitting portion. The bracket may be located below the third load transmitting portion and/or the fourth load transmitting portion. The bracket may contact the third load transmitting portion and/or the fourth load transmitting portion. Accordingly, the third load transmitting portion and/or the fourth load transmitting portion can transmit load of the rear seat to the bracket suitably. The third load transmitting portion may be located rightward of the hook in bottom view of the vehicle. The fourth load transmitting portion may be located leftward of the hook in bottom view of the vehicle. The third load transmitting portion, the hook, and the fourth load transmitting portion may be lined-up in the transverse direction of the vehicle in bottom view of the vehicle. Accordingly, the third load transmitting portion and the fourth load transmitting portion can relax an external force applied to the hook suitably. Accordingly, the third load transmitting portion and the fourth load transmitting portion can relieve stress of the hook suitably. Consequently, the locking mechanism can lock the hook suitably.

It is preferred in the straddled vehicle described above that the rear seat may comprise a right engaging portion located rightward of the position regulator and/or configured to contact the position regulator, and/or a left engaging portion located leftward of the position regulator and/or configured to contact the position regulator. The rear seat may comprise the right engaging portion and/or the left engaging portion. The right engaging portion may be located rightward of the position regulator. The left engaging portion may be located leftward of the position regulator. The right engaging portion and the left engaging portion may each contact the position regulator. The position regulator may regulate movement of the right engaging portion to a position more leftward than the position regulator. The position regulator may regulate movement of the left engaging portion to a position more rightward than the position regulator. Consequently, the position regulator can suitably regulate movement of the rear seat relative to the rear grip in the transverse direction of the vehicle.

It is preferred that the straddled vehicle described above may further comprise a storage member which may be located below the seat, leftward of the right seat frame, and/or rightward of the left seat frame, and/or the storage member may extend from a position more forward than the rear grip to a position more rearward than the right leg portion and the left leg portion. Consequently, a space below the seat and above the storage member can be used effectively as a storage space.

### BRIEF DESCRIPTION OF DRAWINGS

Embodiments of the present invention will now be described, by way of example only, with reference to the accompanying drawings, which are:
- **Fig. 1**: a left side view of a straddled vehicle according to an embodiment;
- **Fig. 2**: a plan view of a rear part of the straddled vehicle;
- **Fig. 3**: a sectional view of the rear part of the straddled vehicle taken along a vehicle center plane;
- **Fig. 4**: a perspective view of the rear part of the straddled vehicle;
- **Fig. 5**: a plan view of the rear part of the straddled vehicle;
- **Fig. 6**: a plan view of the rear part of the straddled vehicle;
- **Fig. 7**: a rear view of the rear part of the straddled vehicle;
- **Fig. 8**: a left side view of the rear part of the straddled vehicle;
- **Fig. 9**: a plan view of the rear part of the straddled vehicle;
- **Fig. 10**: a perspective view of a rear seat seen from below;
- **Fig. 11**: a bottom view of the rear seat;
- **Fig. 12**: a left side view of the rear seat;
- **Fig. 13**: a rear view of the rear seat;
- **Fig. 14**: a perspective view of a position regulator and the rear seat; and
- **Fig. 15**: a view illustrating procedures of attaching and detaching the rear seat.

### DETAILED DESCRIPTION OF DRWINGS

A straddled vehicle 1 according to an embodiment of the present invention will be described below with reference to the accompanying drawings.. A street type vehicle will be described as one example of the straddled vehicle 1.

### 1. Outline Construction of Straddled Vehicle 1

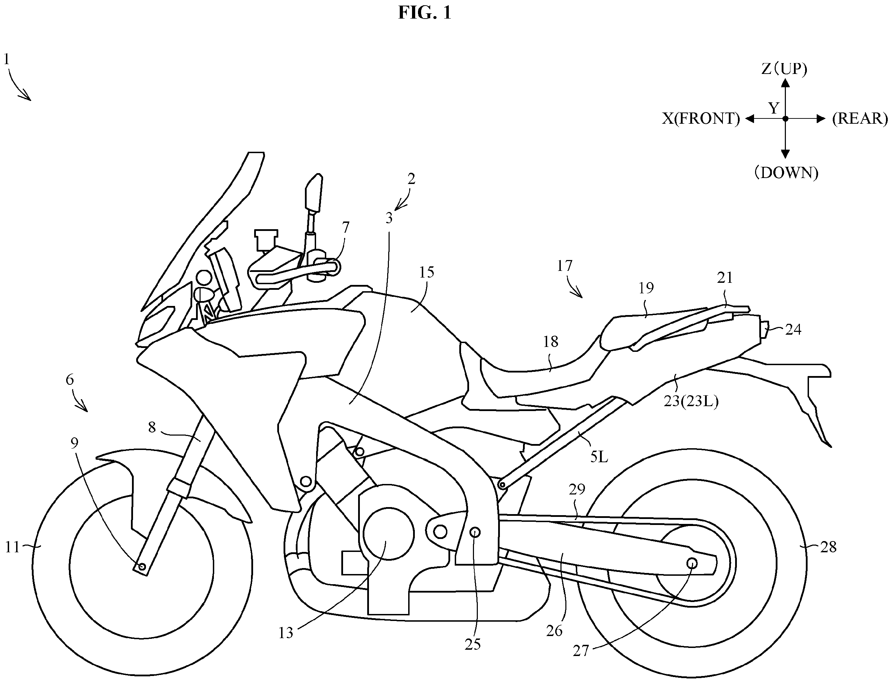

Fig. 1 is a left side view of a straddled vehicle 1 according to an embodiment. The straddled vehicle 1 is, for example, a street type vehicle.

Fig. 1 shows a longitudinal direction X, a transverse direction Y, and an up-down direction Z of the straddled vehicle 1.

The straddled vehicle 1 comprises a body frame 2. The body frame 2 comprises a main frame 3. The main frame 3 extends rearward from a front part of the body frame 2. More specifically, the main frame 3 extends rearward and downward in side view of the vehicle.

The straddled vehicle 1 comprises a steering device 6. The steering device 6 is supported by the front part of the body frame 2. The steering device 6 is rotatable relative to the body frame 2.

The steering device 6 comprises a handlebar 7, a front suspension 8, and a front axle 9. The handlebar 7 is located in an upper part of the steering device 6. The front suspension 8 extends forward and downward from the handlebar 7. The front axle 9 is located in a lower part of the steering device 6. The front axle 9 is supported by the front suspension 8.

The straddled vehicle 1 comprises a front wheel 11. The front wheel 11 is supported by the steering device 6. The front wheel 11 is supported by the front axle 9. The front wheel 11 is rotatable about the front axle 9.

The straddled vehicle 1 comprises an engine 13. At least part of the engine 13 is located below the main frame 3 in side view of the vehicle. The engine 13 is located behind the steering device 6 and the front wheel 11 in side view of the vehicle. The engine 13 is supported by the body frame 2. For example, the engine 13 is supported by the main frame 3. The engine 13 is fixed to the body frame 2. The engine 13 does not swing relative to the body frame 2.

The straddled vehicle 1 comprises a fuel tank 15. The fuel tank 15 is located behind the steering device 6 in side view of the vehicle. The fuel tank 15 is located more rearward than the front wheel 11. The fuel tank 15 is located above the engine 13 in side view of the vehicle. At least part of the fuel tank 15 is above the main frame 3 in side view of the vehicle. The fuel tank 15 is supported by the body frame 2.

The straddled vehicle 1 comprises a seat 17. The seat 17 is located behind the fuel tank 15. The seat 17 is entirely located lower than an upper end of the fuel tank 15. At least part of the seat 17 is located at the same height position as that of the fuel tank 15 in side view of the vehicle. The seat 17 is located more rearward and higher than the engine 13. The seat 17 is supported by the body frame 2.

The seat 17 comprises a front seat 18 and a rear seat 19. The rear seat 19 is located behind the front seat 18.

At least part of the rear seat 19 is located higher than the front seat 18.

The straddled vehicle 1 comprises a rear grip 21. The rear grip 21 overlaps the seat 17 in side view of the vehicle. The rear grip 21 overlaps the rear seat 19 in side view of the vehicle.

The straddled vehicle 1 comprises a side cover 23. The side cover 23 is located below the seat 17 in side view of the vehicle. The side cover 23 is located below the rear grip 21 in side view of the vehicle.

The straddled vehicle 1 comprises a tail-light 24. The tail-light 24 is also called a rear light. The tail-light 24 is located more rearward than the rear grip 21. The tail-light 24 is located behind the side cover 23 in side view of the vehicle.

The straddled vehicle 1 comprises a pivot shaft 25, a swing arm 26, a rear axle 27, and a rear wheel 28. The pivot shaft 25 is located behind the engine 13 in side view of the vehicle. The pivot shaft 25 is located lower than the fuel tank 15 and the seat 17. The pivot shaft 25 is supported by the body frame 2. The swing arm 26 is supported by the pivot shaft 25. The swing arm 26 extends rearward from the pivot shaft 25. The swing arm 26 is swingable about the pivot shaft 25. The rear axle 27 is supported by a rear part of the swing arm 26. The rear wheel 28 is supported by the rear axle 27. The rear wheel 28 is rotatable about the rear axle 27. The rear axle 27 and the rear wheel 28 are located below the seat 17 and the rear grip 21 in side view of the vehicle. The rear axle 27 and the rear wheel 28 are located below the rear seat 19 in side view of the vehicle.

The straddled vehicle 1 comprises a chain 29. The chain 29 couples the rear wheel 28. The chain 29 transmits power, outputted from the engine 13, to the rear wheel 28. The rear wheel 28 rotates around the rear axle 27 by the power transmitted from the chain 29.

The driver sits down on the front seat 18. The driver sits straddling the front seat 18, and puts on a knee grip. The knee grip is a holding of part of the straddled vehicle 1 between the driver's legs. The part of the straddled vehicle 1 is, for example, at least part of the main frame 3 and the fuel tank 15. The driver of the straddled vehicle 1 grips the handlebar 7 and steers the steering device 6.

A fellow passenger on the straddled vehicle 1 sits down on the rear seat 19. The fellow passenger grips the rear grip 21. The fellow passenger does not steer the straddled vehicle 1. If the driver and the fellow passenger are not distinguished, the driver and the fellow passenger are collectively referred to as a rider of the straddled vehicle 1.

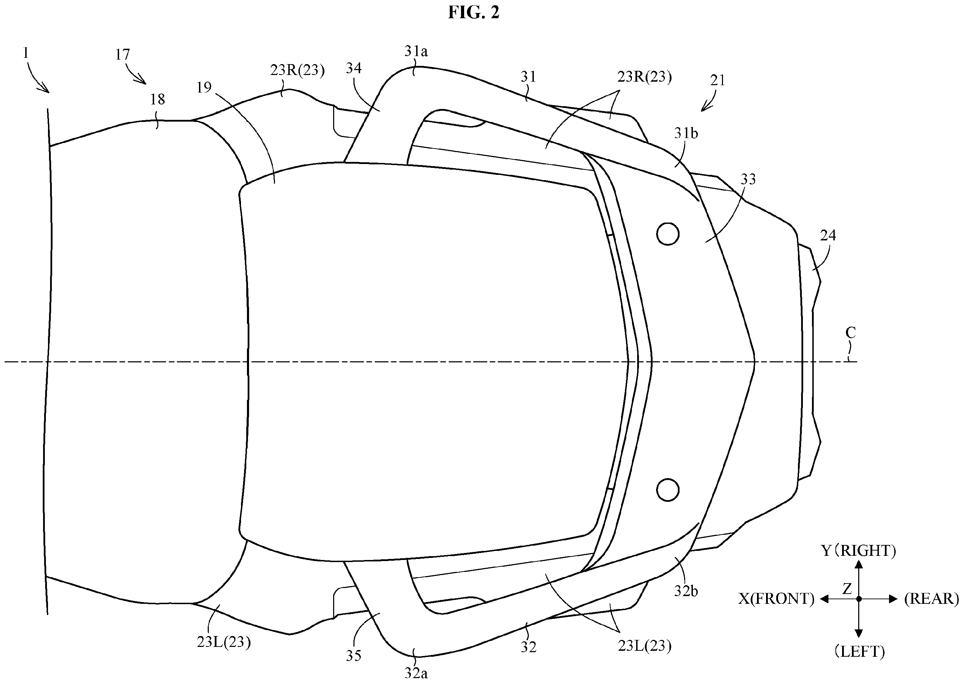

Fig. 2 is a plan view of the rear part of the straddled vehicle 1. Fig. 2 shows a vehicle center plane C. The vehicle center plane C is an imaginary plane perpendicular with respect to the transverse direction Y. The vehicle center plane C passes through the center of the straddled vehicle 1.

The rear grip 21 comprises a right grip portion 31, a left grip portion 32, a coupling portion 33, a right leg portion 34, and a left leg portion 35.

The right grip portion 31 is located rightward of the seat 17 in plan view of the vehicle. The right grip portion 31 is located rightward of the rear seat 19 in plan view of the vehicle. The right grip portion 31 is entirely located more rightward than the rear seat 19.

The right grip portion 31 extends in the longitudinal direction X. The right grip portion 31 has a front end 31a and a rear end 31b. The rear end 31b is located more rearward than the seat 17.

The left grip portion 32 is located leftward of the seat 17 in plan view of the vehicle. The left grip portion 32 is located leftward of the rear seat 19 in plan view of the vehicle. The left grip portion 32 is entirely located more leftward than the rear seat 19.

The left grip portion 32 extends in the longitudinal direction X. The left grip portion 32 has a front end 32a and a rear end 32b. The rear end 32b is located more rearward than the seat 17.

The coupling portion 33 is located behind the seat 17 in plan view of the vehicle. The coupling portion 33 is located behind the rear seat 19 in plan view of the vehicle. The coupling portion 33 is entirely located more rearward than the seat 17.

The coupling portion 33 extends in the transverse direction Y. The coupling portion 33 extends from the rear end 31b of the right grip portion 31 to the rear end 32b of the left grip portion 32. The coupling portion 33 is connected to the rear end 31b of the right grip portion 31. The coupling portion 33 is connected to the rear end 32b of the left grip portion 32.

The right leg portion 34 is connected to the front end 31a of the right grip portion 31. The right leg portion 34 extends leftward from the front end 31a of the right grip portion 31.

The left leg portion 35 is connected to the front end 32a of the left grip portion 32. The left leg portion 35 extends rightward from the front end 32a of the left grip portion 32.

The side cover 23 comprises a right side cover 23R and a left side cover 23L. The right side cover 23R is located rightward of the seat 17 in plan view of the vehicle. The left side cover 23L is located leftward of the seat 17 in plan view of the vehicle.

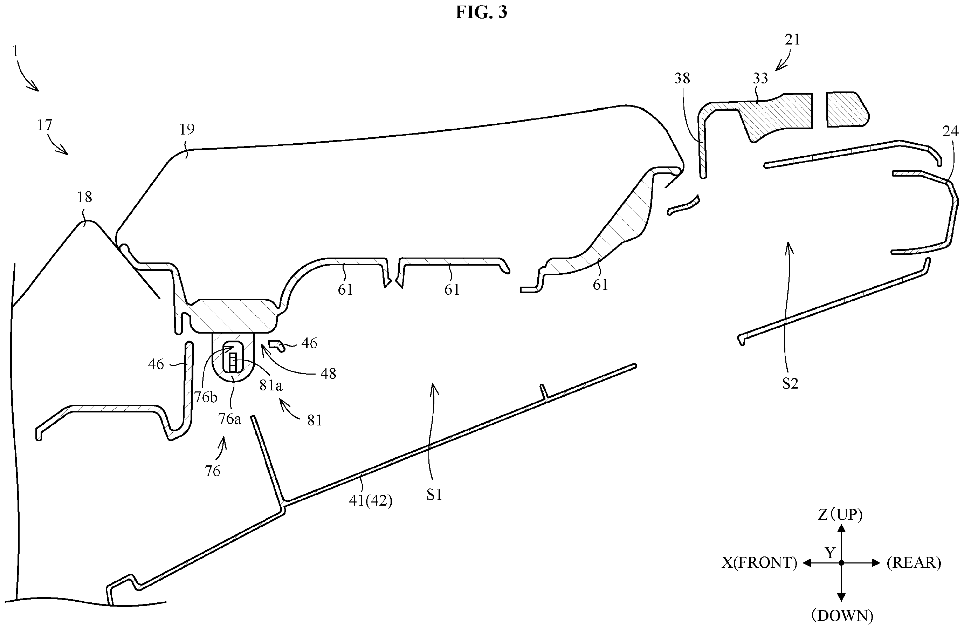

Fig. 3 is a sectional view of the rear part of the straddled vehicle 1 taken along a vehicle center plane C. The straddled vehicle 1 forms a first space S1 below the seat 17. The first space S1 contacts the seat 17. For example, the first space S1 is located below the rear seat 19. For example, the first space S1 is located below the front seat 18.

The straddled vehicle 1 comprises a tray 41. The tray 41 is located below the seat 17. A part of the tray 41 is located below the rear seat 19. Another part of the tray 41 is located below the front seat 18. The tray 41 is located above the rear wheel 28.

The first space S1 is located above the tray 41. The first space S1 contacts the tray 41. A length of the first space S1 in the up-down direction Z is relatively large. A separation distance between the seat 17 and the tray 41 in the up-down direction Z is relatively large.

The belongings of the rider can be placed on the tray 41. The first space S1 is available for a cargo room.

The tray 41 corresponds to one example of the storage member in the present invention.

The straddled vehicle 1 comprises a bracket 46. The bracket 46 is located below the seat 17. A part of the bracket 46 is located below a front part of the rear seat 19. Another part of the bracket 46 is located below a rear part of the front seat 18. The bracket 46 is located above the tray 41. The bracket 46 is located in the first space S1.

The straddled vehicle 1 forms a second space S2 below the coupling portion 33. The second space S2 is located behind the first space S1. The second space S2 and the first space S1 are connected.

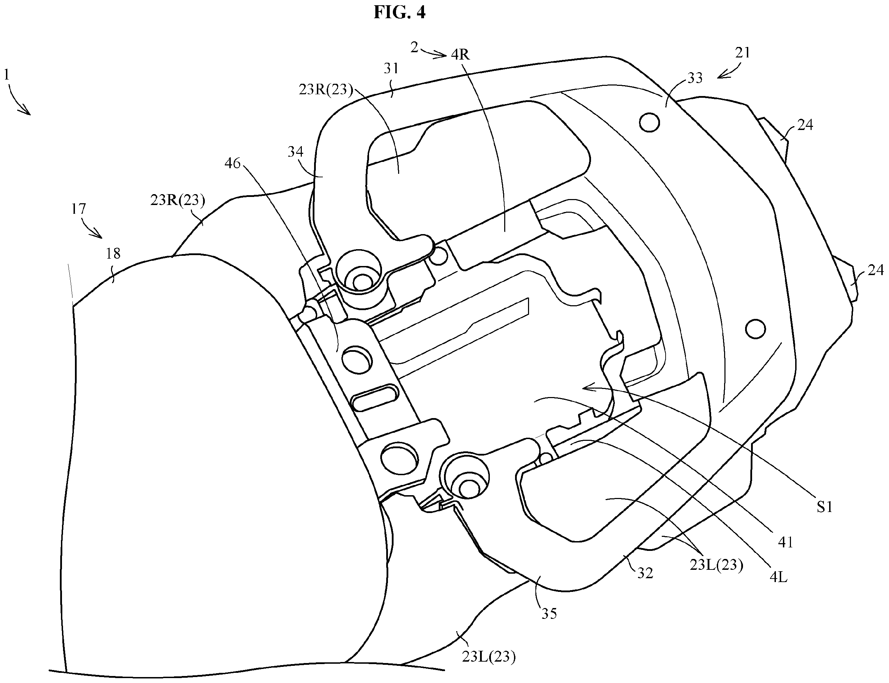

Fig. 4 is a perspective view of the rear part of the straddled vehicle 1. Fig 4 illustrates the straddled vehicle 1 while the rear seat 19 is removed.

The rear seat 19 is separate from the front seat 18. The rear seat 19 is separable from the front seat 18. Only the rear seat 19 is removable while the front seat 18 is attached.

The first space S1 opens upward while the rear seat 19 is removed. Consequently, the rider can use the first space S1 easily. Especially, a part of the first space S1 located below the rear seat 19 can be used easily.

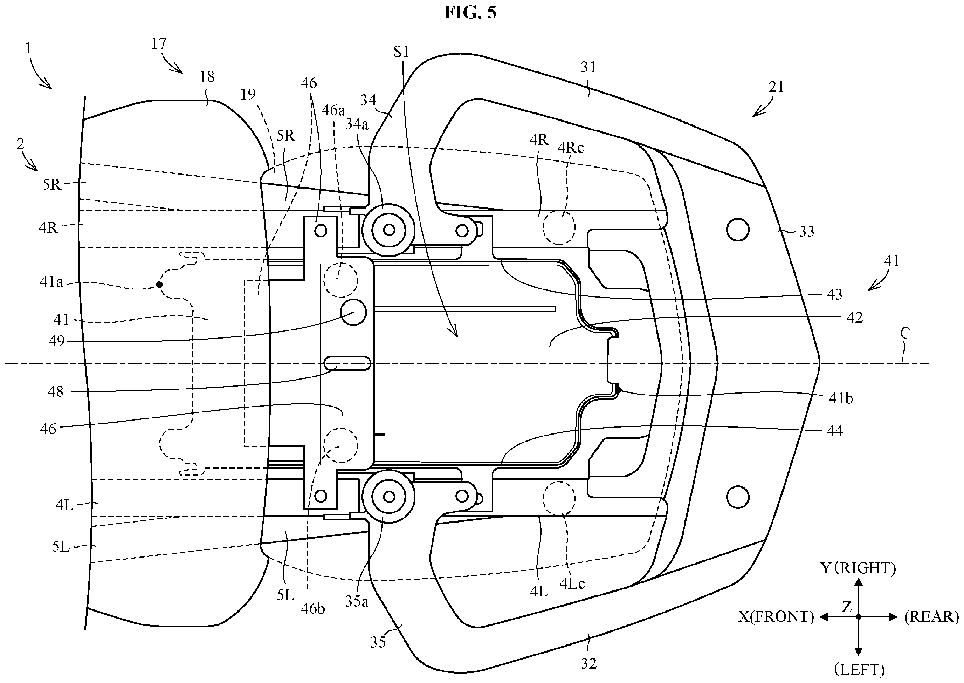

Fig. 5 is a plan view of the rear part of the straddled vehicle 1. Fig. 5 shows the rear seat 19 with dotted lines. Fig. 5 omits illustration of the side cover 23 and the like.

The body frame 2 comprises a right seat frame 4R and a left seat frame 4L. The right seat frame 4R and the left seat frame 4L overlap the seat 17 in plan view of the vehicle. The right seat frame 4R and the left seat frame 4L overlap the rear seat 19 in plan view of the vehicle. The right seat frame 4R and the left seat frame 4L are located below the seat 17.

The left seat frame 4L is located leftward of the right seat frame 4R. The right seat frame 4R is located rightward of the vehicle center plane C. The left seat frame 4L is located leftward of the vehicle center plane C.

The right seat frame 4R extends in the longitudinal direction X in plan view of the vehicle. The left seat frame 4L extends in the longitudinal direction X in plan view of the vehicle.

The rear grip 21 is entirely located more rearward than the front seat 18.

Part of the right leg portion 34 and part of the left leg portion 35 each overlap the seat 17 in plan view of the vehicle. Part of the right leg portion 34 and part of the left leg portion 35 each overlap the rear seat 19 in plan view of the vehicle. Part of the right leg portion 34 and part of the left leg portion 35 are each located below the rear seat 19.

The right grip portion 31 is located rightward of the right seat frame 4R in plan view of the vehicle. The right grip portion 31 is entirely located more rightward than the right seat frame 4R. The left grip portion 32 is located leftward of the left seat frame 4L in plan view of the vehicle. The left grip portion 32 is entirely located more leftward than the left seat frame 4L.

The tray 41 overlaps the seat 17 in plan view of the vehicle. Part of the tray 41 overlaps the rear seat 19 in plan view of the vehicle. Another part of the tray 41 overlaps the front seat 18 in plan view of the vehicle.

The tray 41 is located between the right seat frame 4R and the left seat frame 4L. The tray 41 is located leftward of the right seat frame 4R and rightward of the left seat frame 4L.

The tray 41 extends in the longitudinal direction X. The tray 41 extends from a position more forward than the rear grip 21 to a position more rearward than the right leg portion 34 and the left leg portion 35.

The tray 41 has a front end 41a and a rear end 41b. The front end 41a is located more forward than the rear grip 21. The front end 41a is located more forward than the rear seat 19. The front end 41a is located more forward than the bracket 46. The rear end 41b is located more rearward than the right leg portion 34 and the left leg portion 35. The rear end 41b is located more forward than the coupling portion 33.

The tray 41 comprises a base 42, a right wall 43, and a left wall 44. The base 42 is of an approximately flat plate shape. The base 42 does not overlap the rear grip 21 in plan view of the vehicle. The base 42 intersects the vehicle center plane C. The base 42 is also illustrated in Fig. 3. The base 42 is inclined forward and downward. Moreover, the base 42 extends in the transverse direction Y. The right wall 43 extends upward from a right edge of the base 42. The right wall 43 is located rightward of the vehicle center plane C in plan view of the vehicle. The right wall 43 is located leftward of the right seat frame 4R in plan view of the vehicle. The right wall 43 extends in the longitudinal direction X in plan view of the vehicle. The left wall 44 extends upward from a left edge of the base 42. The left wall 44 is located leftward of the vehicle center plane C in plan view of the vehicle. The left wall 44 is located rightward of the left seat frame 4L in plan view of the vehicle. The left wall 44 extends in the longitudinal direction X in plan view of the vehicle.

The bracket 46 overlaps the seat 17 in plan view of the vehicle. Part of the bracket 46 overlaps the rear seat 19 in plan view of the vehicle. The bracket 46 overlaps the tray 41 in plan view of the vehicle.

The bracket 46 is located more forward than the rear grip 21. The bracket 46 is located more forward than the right leg portion 34 and the left leg portion 35.

The bracket 46 extends in the transverse direction Y. The bracket 46 extends across the first space S1 in the transverse direction Y. The bracket 46 extends from the right seat frame 4R to the left seat frame 4L. The bracket 46 intersects the vehicle center plane C. The bracket 46 is supported by the right seat frame 4R and the left seat frame 4L.

The first space S1 is located below the seat 17, above the tray 41, leftward of the right seat frame 4R, and rightward of the left seat frame 4L. Especially, a part of the first space S1 positioned below the rear seat 19 can be used easily. Specifically, the part of the first space S1 positioned below the rear seat 19, above the base 42, leftward of the right wall 43, rightward of the left wall 44, and behind the bracket 46 can be used easily.

### 2. Support Configuration of Rear Grip 21

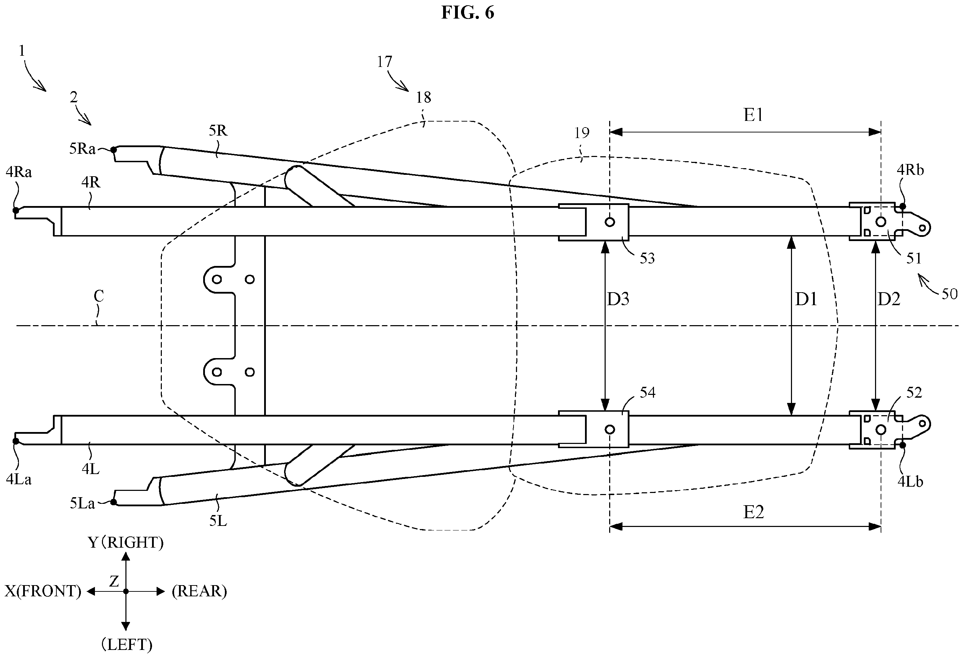

Fig. 6 is a plan view of a rear part of the straddled vehicle 1. Fig. 6 shows the seat 17 with dotted lines. Fig. 6 omits illustration of the rear grip 21 and the tray 41.

The right seat frame 4R and the left seat frame 4L each extend from a position more forward than the seat 17 to a position more rearward than the seat 17.

The right seat frame 4R has a front end 4Ra and a rear end 4Rb. The left seat frame 4L has a front end 4La and a rear end 4Lb. The front ends 4Ra and 4La are each located in front of the seat 17 in plan view of the vehicle. The front ends 4Ra and 4La are each connected to the main frame 3. The rear ends 4Rb and 4Lb are each located behind the seat 17 in plan view of the vehicle. The rear ends 4Rb and 4Lb are each located behind the rear seat 19 in plan view of the vehicle.

The straddled vehicle 1 comprises a stay 50. The stay 50 is supported by the right seat frame 4R and the left seat frame 4L. The stay 50 supports the rear grip 21.

The stay 50 comprises a first stay 51, a second stay 52, a third stay 53, and a fourth stay 54. The first stay 51 is connected to the right seat frame 4R. The second stay 52 is connected to the left seat frame 4L. The third stay 53 is connected to the right seat frame 4R. The fourth stay 54 is connected to the left seat frame 4L.

The first stay 51 and the third stay 53 each overlap the right seat frame 4R in plan view of the vehicle. The second stay 52 and the fourth stay 54 each overlap the left seat frame 4L in plan view of the vehicle.

The first stay 51 and the third stay 53 are located rightward of the vehicle center plane C. The first stay 51 is entirely located rightward of the vehicle center plane C. The third stay 53 is entirely located rightward of the vehicle center plane C. The second stay 52 and the fourth stay 54 are located leftward of the vehicle center plane C. The second stay 52 is entirely located leftward of the vehicle center plane C. The fourth stay 54 is entirely located leftward of the vehicle center plane C.

The first stay 51 and the second stay 52 are each located behind the seat 17 in plan view of the vehicle. The first stay 51 is entirely located behind the seat 17 in plan view of the vehicle. The second stay 52 is entirely located behind the seat 17 in plan view of the vehicle.

The third stay 53 is located in front of the first stay 51 in plan view of the vehicle. The third stay 53 overlaps the rear seat 19 in plan view of the vehicle. The fourth stay 54 is located in front of the second stay 52 in plan view of the vehicle. The fourth stay 54 overlaps the rear seat 19 in plan view of the vehicle.

Fig. 6 shows distances E1 and E2. The distance E1 is a distance between the first stay 51 and the third stay 53 in the longitudinal direction X. The distance E2 is a distance between the second stay 52 and the fourth stay 54 in the longitudinal direction X. The distance E1 is equal to or longer than a length of the right grip portion 31 in the longitudinal direction X. The distance E2 is equal to or longer than a length of the left grip portion 32 in the longitudinal direction X.

The first stay 51 and the second stay 52 are arranged in the transverse direction Y. The first stay 51 and the second stay 52 are separated from each other. The first stay 51 and the second stay 52 are spaced apart from each other. The third stay 53 and the fourth stay 54 are arranged in the transverse direction Y. The third stay 53 and the fourth stay 54 are separated from each other. The third stay 53 and the fourth stay 54 are spaced apart from each other.

The first stay 51 does not extend substantially leftward from the right seat frame 4R. The second stay 52 does not extend substantially rightward from the left seat frame 4L. The stay 50 has no part extending from the first stay 51 to the second stay 52 in the transverse direction Y. The third stay 53 does not extend substantially leftward from the right seat frame 4R. The fourth stay 54 does not extend substantially rightward from the left seat frame 4L. The stay 50 has no part extending from the third stay 53 to the fourth stay 54 in the transverse direction Y.

The first stay 51 and the second stay 52 are each relatively small.

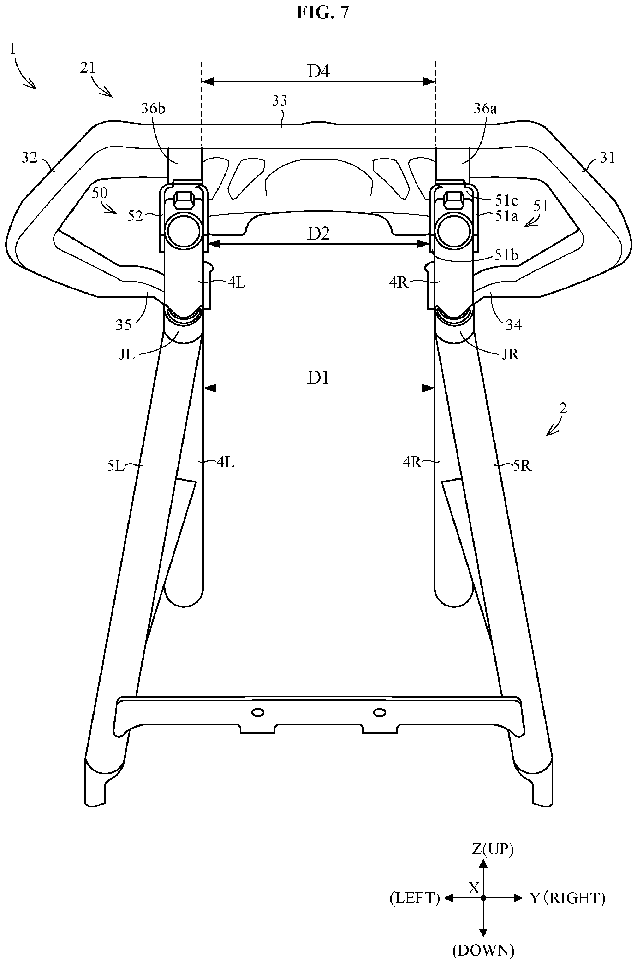

Fig. 7 is a rear view of the rear part of the straddled vehicle 1. Fig. 7 omits illustration of the seat 17 and the tray 41. The first stay 51 and the second stay 52 are each of an approximately U-shape. The first stay 51 and the second stay 52 are each a bent metal plate.

Specifically, the first stay 51 has a right wall 51a, a left wall 51b, and a top wall 51c. The right wall 51a is fixed to a right edge of the right seat frame 4R. The right wall 51a extends upward from the right seat frame 4R. The left wall 51b is fixed to a left edge of the right seat frame 4R. The left wall 51b extends upward from the right seat frame 4R. The top wall 51c extends from an upper end of the right wall 51a to an upper end of the left wall 51b. The second stay 52 has a configuration similar to that of the first stay 51.

A length of the first stay 51 in the transverse direction Y is approximately equal to a length of the right seat frame 4R in the transverse direction Y. Strictly speaking, the length of the first stay 51 in the transverse direction Y is larger than the length of the right seat frame 4R in the transverse direction Y by a thickness of the first stay 51. A length of the second stay 52 in the transverse direction Y is approximately equal to a length of the left seat frame 4L in the transverse direction Y.

Fig. 7 shows separation distances D1 and D2. The separation distance D1 is a spatial distance between the right seat frame 4R and the left seat frame 4L in the transverse direction Y. More specifically, the separation distance D1 is a distance between the left edge of the right seat frame 4R and a right edge of the left seat frame 4L in the transverse direction Y. The separation distance D2 is a spatial distance between the first stay 51 and the second stay 52 in the transverse direction Y. The separation distance D2 is approximately equal to the separation distance D1. The separation distance D2 is substantially equal to the separation distance D1. Strictly speaking, the separation distance D2 is slightly smaller than the separation distance D1. The separation distance D2 is smaller than the separation distance D1 by the thickness of the first stay 51 and a thickness of the second stay 52.

Reference is made to Fig. 6. The third stay 53 and the fourth stay 54 are each relatively small. The third stay 53 and the fourth stay 54 each have a configuration similar to that of the first stay 51. A length of the third stay 53 in the transverse direction Y is approximately equal to the length of the right seat frame 4R in the transverse direction Y. A length of the fourth stay 54 in the transverse direction Y is approximately equal to the length of the left seat frame 4L in the transverse direction Y.

Fig. 6 illustrates a separation distance D3 in addition to the separation distance D1 and the separation distance D2. The separation distance D3 is a spatial distance between the third stay 53 and the fourth stay 54 in the transverse direction Y. The separation distance D3 is approximately equal to the separation distance D1. The separation distance D3 is substantially equal to the separation distance D1. Strictly speaking, the separation distance D3 is smaller than the separation distance D1 by a thickness of the third stay 53 and a thickness of the fourth stay 54. The separation distance D3 is approximately equal to the separation distance D2.

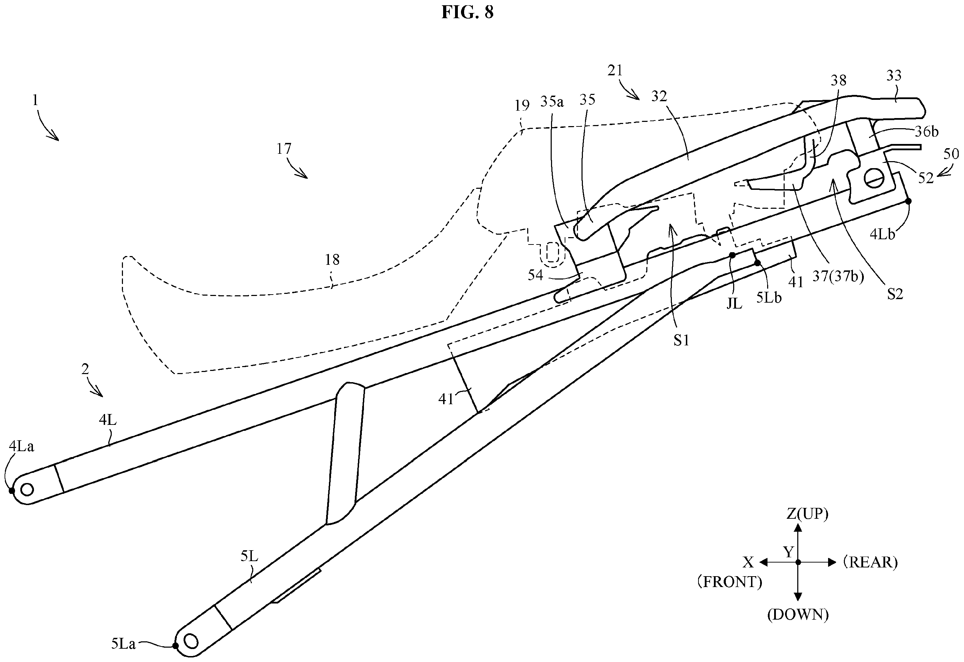

Fig. 8 is a left side view of the rear part of the straddled vehicle 1. Fig. 8 shows the seat 17 with dotted lines. Fig. 8 omits illustration of the side cover 23 and the like.

The left seat frame 4L extends rearward and upward in side view of the vehicle. The right seat frame 4R overlaps the left seat frame 4L in side view of the vehicle. The right seat frame 4R also extends rearward and upward in side view of the vehicle, which illustration is omitted.

The seat 17 is located above the right seat frame 4R and the left seat frame 4L in side view of the vehicle. The rear seat 19 is located above the right seat frame 4R and the left seat frame 4L in side view of the vehicle.

The rear grip 21 is located above the right seat frame 4R and the left seat frame 4L in side view of the vehicle. The rear grip 21 is entirely located above the right seat frame 4R and the left seat frame 4L in side view of the vehicle.

The tray 41 overlaps the right seat frame 4R and the left seat frame 4L in side view of the vehicle. The base 42 of the tray 41 is located below the right seat frame 4R and the left seat frame 4L in side view of the vehicle, which illustration is omitted.

The tray 41 is located below the seat 17 in side view of the vehicle. The tray 41 is located below the rear seat 19 in side view of the vehicle.

A left back stay 5L is located below the left seat frame 4L in side view of the vehicle. The left back stay 5L extends rearward and upward in side view of the vehicle. The left back stay 5L has a front end 5La and a rear end 5Lb. The front end 5La is connected to the main frame 3. The rear end 5Lb of the left back stay 5L is connected to the left seat frame 4L. Here, a joint position between the left seat frame 4L and the left back stay 5L is referred to as a left joint position JL.

A right back stay 5R overlaps the left back stay 5L in side view of the vehicle. The right back stay 5R is located below the right seat frame 4R in side view of the vehicle, which illustration is omitted.

Reference is made to Fig. 7. The right back stay 5R is connected to the right seat frame 4R. Here, a joint position between the right seat frame 4R and the right back stay 5R is referred to as a right joint position JR.

Reference is made to Fig. 6. The left back stay 5L is located leftward of the right back stay 5R. The right back stay 5R is located rightward of the vehicle center plane C. The left back stay 5L is located leftward of the vehicle center plane C.

The right back stay 5R has a front end 5Ra. The front end 5Ra is connected to the main frame 3.

Reference is made to Fig. 8. The second stay 52 is located more rearward than the left joint position JL. The first stay 51 overlaps the second stay 52 in side view of the vehicle, which illustration is omitted. The first stay 51 is located more rearward than the right joint position JR.

Reference is made to Figs. 7 and 8. The first stay 51 extends upward from the right seat frame 4R. The second stay 52 extends upward from the left seat frame 4L. The first stay 51 and the second stay 52 support the coupling portion 33.

The coupling portion 33 is located above the first stay 51 and the second stay 52. The coupling portion 33 is located at a height position approximately equal to that of an upper end of the rear seat 19. The coupling portion 33 is of an approximately flat plate shape. The coupling portion 33 is of an approximately planer plate shape. The coupling portion 33 is of an approximately horizontal plate shape. The coupling portion 33 extends in the transverse direction Y. The coupling portion 33 extends from the first stay 51 to the second stay 52. The coupling portion 33 extends from the right seat frame 4R to the left seat frame 4L.

The coupling portion 33 is connected to the first stay 51 and the second stay 52. The coupling portion 33 couples the right seat frame 4R and the left seat frame 4L via the first stay 51 and the second stay 52.

More specifically, the rear grip 21 comprises bosses 36a and 36b. The bosses 36a and 36b are each located more rearward than the rear seat 19. The bosses 36a and 36b are each of a cylindrical shape. The bosses 36a and 36b are each fixed to the coupling portion 33. The bosses 36a and 36b each extend downward from the coupling portion 33. The boss 36a is located above the first stay 51. The boss 36a is coupled to the first stay 51. The coupling portion 33 is connected to the first stay 51 via the boss 36a. The boss 36b is located above the second stay 52. The boss 36b is coupled to the second stay 52. The coupling portion 33 is connected to the second stay 52 via the boss 36b.

Reference is made to Fig. 7. A length of the boss 36a in the transverse direction Y is approximately equal to the length of the right seat frame 4R in the transverse direction Y. A length of the boss 36b in the transverse direction Y is approximately equal to the length of the left seat frame 4L in the transverse direction Y.

Fig. 7 shows a separation distance D4. The separation distance D4 is a spatial distance between the boss 36a and the boss 36b in the transverse direction Y. The separation distance D4 is approximately equal to the separation distance D1. The separation distance D4 is substantially equal to the separation distance D1. The separation distance D4 is approximately equal to the separation distance D2.

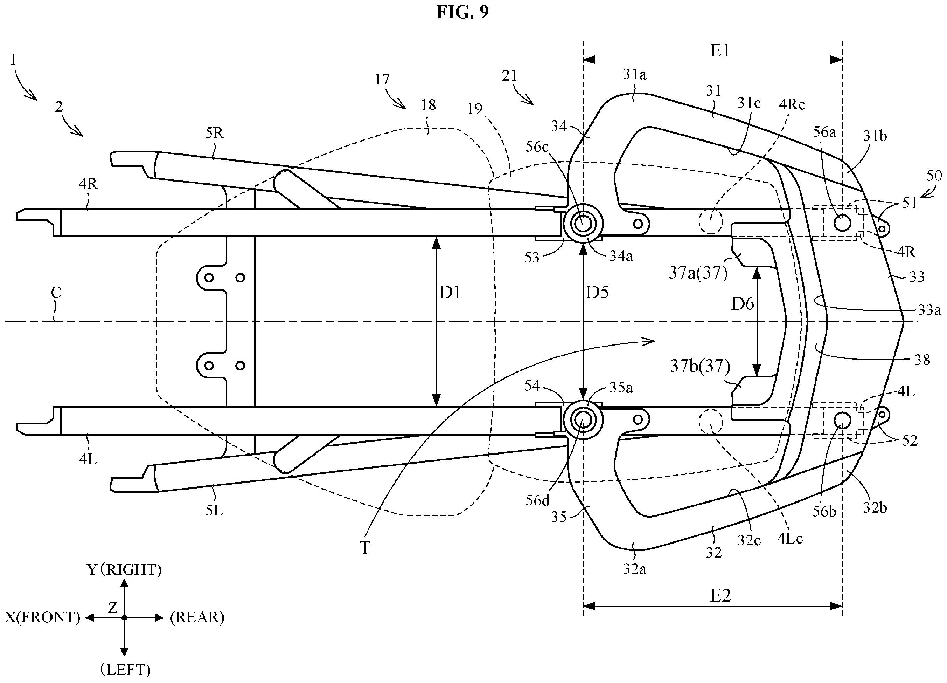

Fig. 9 is a plan view of the rear part of the straddled vehicle 1. Fig. 9 shows the seat 17 with dotted lines. Fig. 9 omits illustration of the tray 41 and the like.

The straddled vehicle 1 comprises fastening portions 56a and 56b. The fastening portion 56a fastens the boss 36a and the first stay 51. The boss 36a is coupled to first stay 51 via the fastening portion 56a. The fastening portion 56b fastens the boss 36b and the second stay 52. The boss 36b is coupled to second stay 52 via the fastening portion 56b.

The coupling portion 33 overlaps the first stay 51 and the second stay 52 in plan view of the vehicle. The coupling portion 33 overlaps the right seat frame 4R and the left seat frame 4L in plan view of the vehicle.

Reference is made to Fig. 8. The fourth stay 54 is located below the rear seat 19 in side view of the vehicle. The fourth stay 54 is located more forward than the left joint position JL. The fourth stay 54 extends upward from the left seat frame 4L. The fourth stay 54 is located below the left leg portion 35. The fourth stay 54 supports the left leg portion 35.

The third stay 53 overlaps the fourth stay 54 in side view of the vehicle, which illustration is omitted. The third stay 53 is located below the rear seat 19 in side view of the vehicle. The third stay 53 is located more forward than the right joint position JR. The third stay 53 extends upward from the right seat frame 4R. The third stay 53 is located below the right leg portion 34. The third stay 53 supports the right leg portion 34.

Reference is made to Fig. 9. The right leg portion 34 extends from the front end 31a of the right grip portion 31 to the third stay 53. The right leg portion 34 overlaps the third stay 53 in plan view of the vehicle. The right leg portion 34 overlaps the right seat frame 4R in plan view of the vehicle. The right leg portion 34 is connected to the third stay 53.

More specifically, the right leg portion 34 comprises a boss 34a. The boss 34a is of a cylindrical shape. The boss 34a extends in the up-down direction Z. The boss 34a overlaps the right seat frame 4R in plan view of the vehicle. The boss 34a overlaps the third stay 53 in plan view of the vehicle. The boss 34a is located above the third stay 53. The boss 34a is coupled to the third stay 53. The right leg portion 34 is connected to the third stay 53 at the boss 34a.

The straddled vehicle 1 comprises a fastening portion 56c. The fastening portion 56c fastens the boss 34a and the third stay 53. The boss 34a is coupled to third stay 53 via the fastening portion 56c.

The left leg portion 35 extends from the front end 32a of the left grip portion 32 to the fourth stay 54. The left leg portion 35 overlaps the fourth stay 54 in plan view of the vehicle. The left leg portion 35 overlaps the left seat frame 4L in plan view of the vehicle. The left leg portion 35 is connected to the fourth stay 54.

More specifically, the left leg portion 35 comprises a boss 35a. The boss 35a is of a cylindrical shape. The boss 35a extends in the up-down direction Z. The boss 35a overlaps the left seat frame 4L in plan view of the vehicle. The boss 35a overlaps the fourth stay 54 in plan view of the vehicle. The boss 35a is located above the fourth stay 54. The boss 35a is coupled to the fourth stay 54. The left leg portion 35 is connected to the fourth stay 54 at the boss 35a.

The straddled vehicle 1 comprises a fastening portion 56d. The fastening portion 56d fastens the boss 35a and the fourth stay 54. The boss 35a is coupled to fourth stay 54 via the fastening portion 56d.

The fastening portions 56a to 56d are each, for example, a bolt.

The distance E1 described above corresponds to a distance between the fastening portion 56a and the fastening portion 56c in the longitudinal direction X. The distance E2 described above corresponds to a distance between the fastening portion 56b and the fastening portion 56d in the longitudinal direction X.

### 3. Shape of Rear Grip 21

Reference is made to Fig. 9. The rear grip 21 is of an approximately U-shape that opens forward in plan view of the vehicle.

The right leg portion 34 and the left leg portion 35 are arranged in the transverse direction Y. The right leg portion 34 and the left leg portion 35 are separated from each other. The right leg portion 34 and the left leg portion 35 are spaced apart from each other.

The right leg portion 34 does not extend substantially leftward from the right seat frame 4R. The left leg portion 35 does not extend substantially rightward from the left seat frame 4L.

Fig. 9 shows a separation distance D5. The separation distance D5 is a spatial distance between the right leg portion 34 and the left leg portion 35 in the transverse direction Y. The separation distance D5 is approximately equal to the separation distance D1. The separation distance D5 is substantially equal to the separation distance D1.

The rear grip 21 forms an inner space T. The inner space T is surrounded by the right grip portion 31, the left grip portion 32, and the coupling portion 33. Specifically, the right grip portion 31 has a left edge 31c in plan view of the vehicle. The left grip portion 32 has a right edge 32c in plan view of the vehicle. The coupling portion 33 has a front edge 33a in plan view of the vehicle. The inner space T contacts the left edge 31c, the right edge 32c, and the front edge 33a in plan view of the vehicle. The inner space T opens forward of the rear grip 21. The inner space T opens in front of the rear grip 21. Specifically, the inner space T opens at a front part of the rear grip 21. The rear grip 21 opens a front part of the inner space T. The inner space T is opened through a gap between the right leg portion 34 and the left leg portion 35.

The rear grip 21 does not have any part located more forward than the coupling portion 33 and extending in the transverse direction Y. For example, the rear grip 21 does not have any part extending from the right leg portion 34 to the left leg portion 35. For example, the rear grip 21 does not have any part, except for the coupling portion 33, extending from the right grip portion 31 to the left grip portion 32. For example, the rear grip 21 does not include any part extending across the first space S1 in the transverse direction Y.

### 4. Configuration of Regulating Position of Rear Seat 19 by Rear Grip 21

Reference is made to Figs. 8 and 9. The rear grip 21 comprises a position regulator 37. The position regulator 37 contacts the rear seat 19. The position regulator 37 contacts a rear part of the rear seat 19. The position regulator 37 regulates upward movement of the rear seat 19 relative to the rear grip 21.

The position regulator 37 is located in front of the coupling portion 33 in plan view of the vehicle. The position regulator 37 is located leftward of the right grip portion 31 in plan view of the vehicle. The position regulator 37 is located rightward of the left grip portion 32 in plan view of the vehicle. The position regulator 37 is located more rearward than the right leg portion 34 and the left leg portion 35.

The position regulator 37 is supported while being suspended from the coupling portion 33. In other words, the position regulator 37 is suspended and supported by the coupling portion 33. The coupling portion 33 is located higher than the position regulator 37. The coupling portion 33 is entirely located higher than the position regulator 37. The rear grip 21 comprises no part below the position regulator 37.

The rear grip 21 comprises a hanging wall 38. The hanging wall 38 is connected to the coupling portion 33. The hanging wall 38 extends downward from the coupling portion 33. Specifically, the coupling portion 33 has the front edge 33a. The hanging wall 38 extends downward from the front edge 33a. The hanging wall 38 extends downward from a height position substantially equal to that of the upper end of the rear seat 19. The hanging wall 38 is located behind the rear seat 19.

The position regulator 37 is supported by the hanging wall 38. The position regulator 37 is connected to a lower end of the hanging wall 38. The position regulator 37 extends forward from the hanging wall 38. The position regulator 37 overlaps the rear seat 19 in plan view of the vehicle.

Specifically, the position regulator 37 comprises a first position regulator 37a and a second position regulator 37b. The first position regulator 37a and the second position regulator 37b are each of an approximately planar small piece shape. The first position regulator 37a and the second position regulator 37b are each connected to the hanging wall 38. The first position regulator 37a and the second position regulator 37b each extend forward from the hanging wall 38. The first position regulator 37a and the second position regulator 37b are each approximately horizontal.

The second position regulator 37b is located leftward of the first position regulator 37a. The first position regulator 37a and the second position regulator 37b are located at the same height position. The first position regulator 37a and the second position regulator 37b are separated from each other. The first position regulator 37a and the second position regulator 37b are spaced apart from each other.

The first position regulator 37a is located rightward of the vehicle center plane C. The first position regulator 37a is entirely located rightward of the vehicle center plane C. The second position regulator 37b is located leftward of the vehicle center plane C. The second position regulator 37b is entirely located leftward of the vehicle center plane C. The position regulator 37 is not located on the vehicle center plane C.

The first position regulator 37a is located more leftward than the right seat frame 4R. The first position regulator 37a is located near the right seat frame 4R. The second position regulator 37b is located more rightward than the left seat frame 4L. The second position regulator 37b is located near the left seat frame 4L.

Fig. 9 shows a separation distance D6. The separation distance D6 is a spatial distance between the first position regulator 37a and the second position regulator 37b in the transverse direction Y. The separation distance D6 is smaller than the separation distance D1. The separation distance D6 is, for example, 50% or more of the separation distance D1. The separation distance D6 is, for example, 60% or more of the separation distance D1. The separation distance D6 is relatively large.

Reference is made to Fig. 8. The position regulator 37 is located above the tray 41 in side view of the vehicle. The position regulator 37 is located above the right seat frame 4R and the left seat frame 4L in side view of the vehicle. The position regulator 37 is entirely located above the right seat frame 4R and the left seat frame 4L in side view of the vehicle. The position regulator 37 is located higher than the third stay 53 and the fourth stay 54. The position regulator 37 is located higher than the right leg portion 34 and the left leg portion 35. The position regulator 37 is located higher than the bosses 34a and 35a.

The position regulator 37 is located lower than the bosses 36a and 36b.

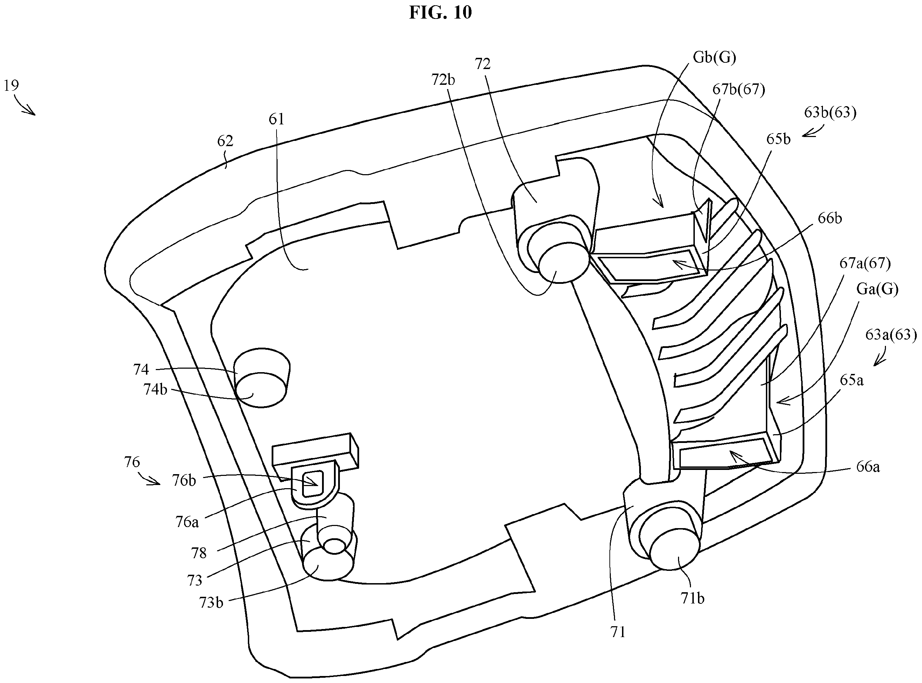

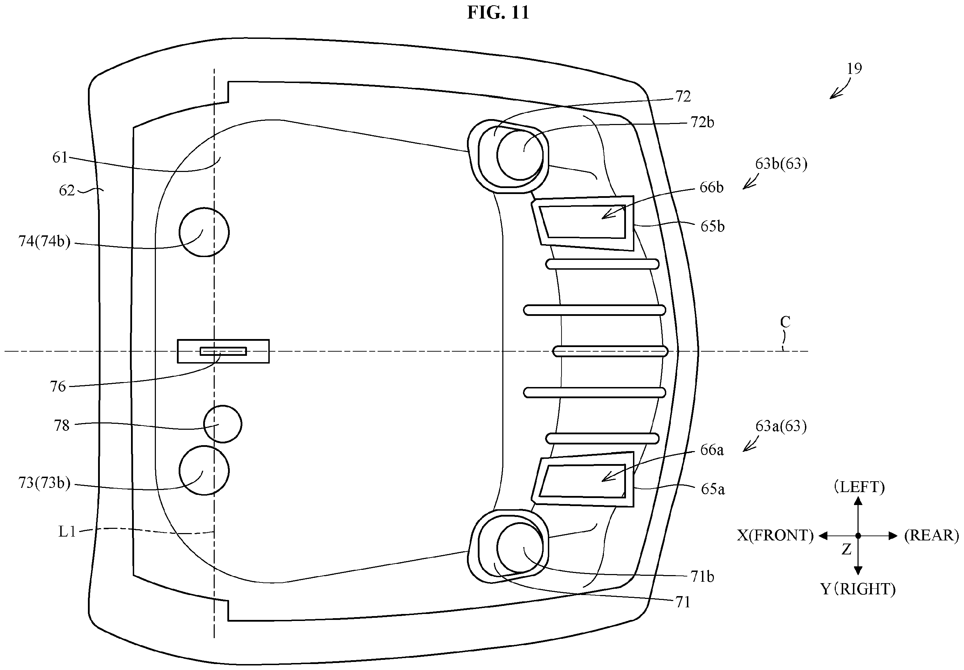

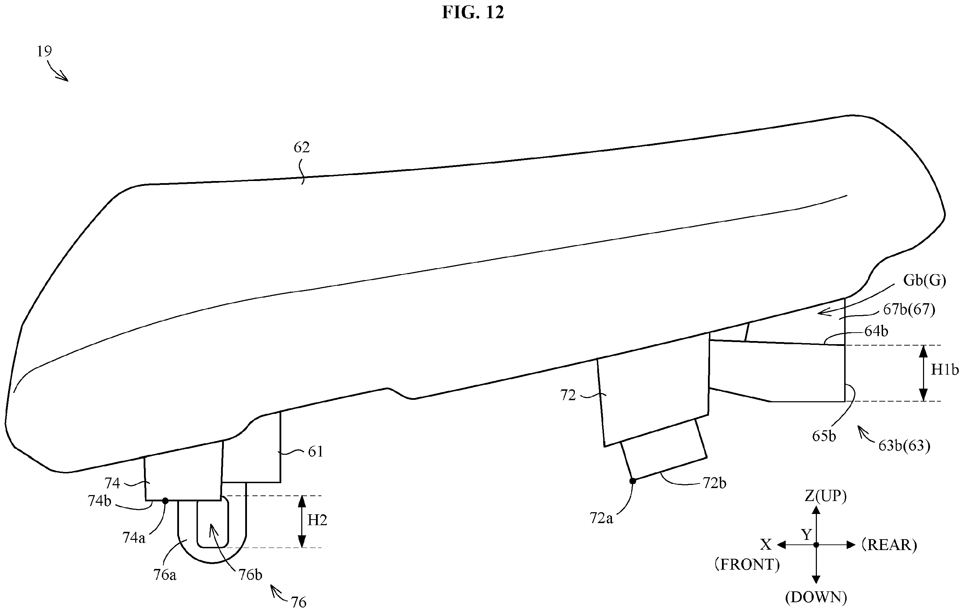

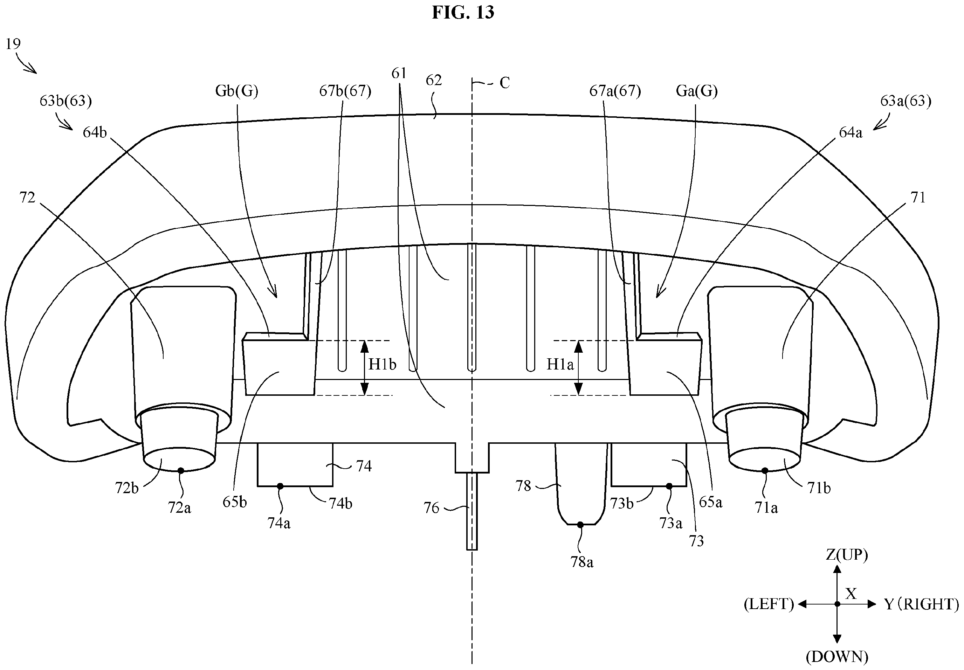

Fig. 10 is a perspective view of the rear seat seen 19 from below. Fig. 11 is a bottom view of the rear seat 19. Fig. 12 is a left side view of the rear seat 19. Fig. 13 is a rear view of the rear seat 19.

The rear seat 19 comprises a base board 61 and a skin 62. The skin 62 covers over the base board 61. The rear seat 19 further comprises a cushion material, not shown. The cushion material is provided between the base board 61 and the skin 62.

The rear seat 19 comprises a lower engaging portion 63. The lower engaging portion 63 is located at the rear part of the rear seat 19. The lower engaging portion 63 is located below the position regulator 37. The lower engaging portion 63 contacts the position regulator 37. The lower engaging portion 63 forms a gap G thereabove. For example, the gap G is located below the base board 61 and above the lower engaging portion 63. The position regulator 37 is inserted into the gap G.

Specifically, the lower engaging portion 63 comprises a first lower engaging portion 63a and a second lower engaging portion 63b. The first lower engaging portion 63a contacts the first position regulator 37a. The second lower engaging portion 63b contacts the second position regulator 37b. The second lower engaging portion 63b is located leftward of the first lower engaging portion 63a. The first lower engaging portion 63a is located rightward of the vehicle center plane C. The second lower engaging portion 63b is located leftward of the vehicle center plane C.

The first lower engaging portion 63a is of a box shape. The first lower engaging portion 63a has a top face 64a, a rear face 65a, and a hollow portion 66a. The hollow portion 66a passes through the first lower engaging portion 63a in the up-down direction Z. The top face 64a is approximately horizontal. The top face 64a is of a ring shape enclosing the hollow portion 66a. The rear face 65a extends downward from the top face 64a. The rear face 65a is of a rectangular shape. The second lower engaging portion 63b is of a shape same as that of the first lower engaging portion 63a. The second lower engaging portion 63b has a top face 64b, a rear face 65b, and a hollow portion 66b.

The gap G comprises a first gap Ga and a second gap Gb. The first gap Ga is located above the top face 64a. The second gap Gb is located above the top face 64b.

Fig. 13 shows lengths H1a and H1b. The length H1a is a length of the rear face 65a in the up-down direction Z. The length H1b is a length of the rear face 65b in the up-down direction Z. The length H1b is approximately equal to the length H1a. The lengths H1a and H1b are each relatively long.

The rear seat 19 comprises a supporting portion 67. The supporting portion 67 supports the lower engaging portion 63. The supporting portion 67 is located at the rear part of the rear seat 19.

Specifically, the supporting portion 67 comprises a first supporting portion 67a and a second supporting portion 67b. The first supporting portion 67a and the second supporting portion 67b each extend downward from the base board 61. The first supporting portion 67a and the second supporting portion 67b are each of a plate shape perpendicular in the transverse direction Y. The second supporting portion 67b is located leftward of the first supporting portion 67a. The first supporting portion 67a is located rightward of the vehicle center plane C. The second supporting portion 67b is located leftward of the vehicle center plane C.

The first lower engaging portion 63a is supported by the first supporting portion 67a. The first lower engaging portion 63a is connected to a lower end of the first supporting portion 67a. The second lower engaging portion 63b is supported by the second supporting portion 67b. The second lower engaging portion 63b is connected to a lower end of the second supporting portion 67b. The first gap Ga is located rightward of the first supporting portion 67a. The second gap Gb is located leftward of the second supporting portion 67b.

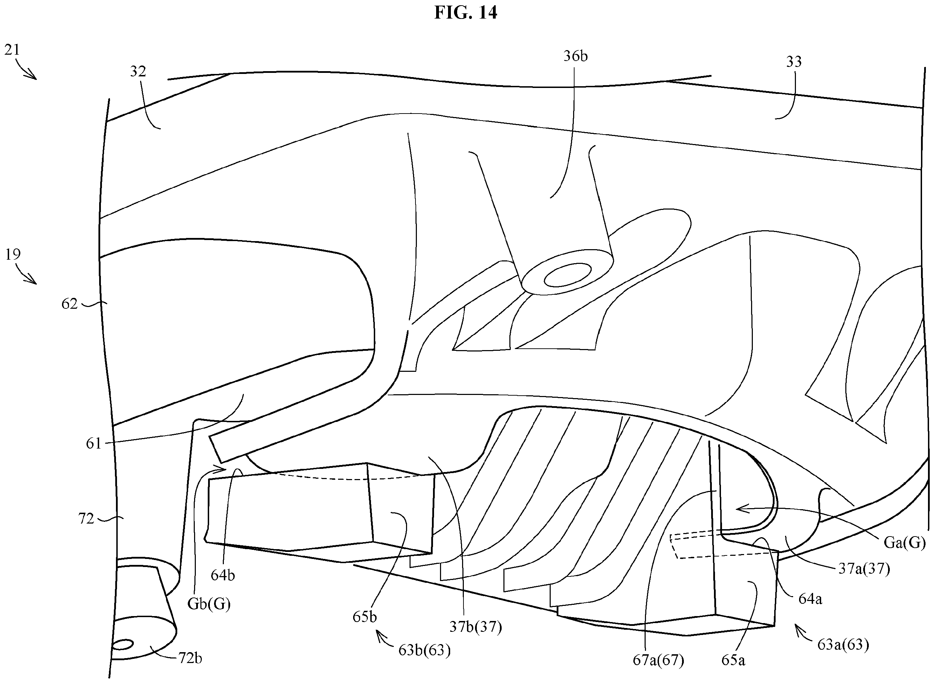

Fig. 14 is a perspective view of the position regulator 37 and the rear seat 19. The lower engaging portion 63 is located below the position regulator 37. The position regulator 37 is located in the gap G. The lower engaging portion 63 contacts the position regulator 37. The position regulator 37 regulates movement of the lower engaging portion 63 to a position higher than the position regulator 37.

Specifically, the first lower engaging portion 63a is located below the first position regulator 37a. The first position regulator 37a is located in the first gap Ga. The top face 64a contacts the first position regulator 37a. The first position regulator 37a regulates movement of the first lower engaging portion 63a to a position higher than the first position regulator 37a. The second lower engaging portion 63b is located below the second position regulator 37b. The second position regulator 37b is located in the second gap Gb. The top face 64b contacts the second position regulator 37b. The second position regulator 37b regulates movement of the second lower engaging portion 63b to a position higher than the second position regulator 37b.

A correct position of the first lower engaging portion 63a is below the first position regulator 37a. A position above the first position regulator 37a is an incorrect position for the first lower engaging portion 63a. Since the length H1a is relatively large, the first lower engaging portion 63a is hardly located at its incorrect position. That is, the rear face 65a prevents the first lower engaging portion 63a from being located above the first position regulator 37a. Likewise, a correct position of the second lower engaging portion 63b is below the second position regulator 37b. A position above the second position regulator 37b is an incorrect position for the second lower engaging portion 63b. Since the length H1b is relatively large, the second lower engaging portion 63b is hardly located at its incorrect position. That is, the rear face 65b prevents arrangement of the second lower engaging portion 63b above the second position regulator 37b.

The rear faces 65a and 65b are one example of the blocking portion in the present invention.

Moreover, the supporting portion 67 is located rightward and leftward of the position regulator 37. The supporting portion 67 contacts the position regulator 37. The position regulator 37 regulates movement of the supporting portion 67 to both positions more rightward and more leftward than the position regulator 37. This causes the position regulator 37 to regulate movement of the rear seat 19 relative to the rear grip 21 in the transverse direction Y.

Specifically, the first supporting portion 67a is located leftward of the first position regulator 37a. The first supporting portion 67a contacts the first position regulator 37a. The first position regulator 37a regulates movement of the first supporting portion 67a to a position more rightward than the first position regulator 37a. The second supporting portion 67b is located rightward of the second position regulator 37b. The second supporting portion 67b contacts the second position regulator 37b. The second position regulator 37b regulates movement of the second supporting portion 67b to a position more leftward than the second position regulator 37b.

The first supporting portion 67a is one example of the left engaging portion in the present invention. The second supporting portion 67b is one example of the right engaging portion in the present invention.

### 5. Configuration for supporting rear seat 19

Reference is made to Fig. 11. The rear seat 19 comprises a first load transmitting portion 71 and a second load transmitting portion 72. The first load transmitting portion 71 is located above the right seat frame 4R. The first load transmitting portion 71 contacts the right seat frame 4R. The first load transmitting portion 71 transmits load to the right seat frame 4R. The second load transmitting portion 72 is located above the left seat frame 4L. The second load transmitting portion 72 contacts the left seat frame 4L. The second load transmitting portion 72 transmits load to the left seat frame 4L.

The first load transmitting portion 71 and the second load transmitting portion 72 are located at the rear part of the rear seat 19. The second load transmitting portion 72 is located leftward of the first load transmitting portion 71. The first load transmitting portion 71 is located rightward of the vehicle center plane C. The second load transmitting portion 72 is located leftward of the vehicle center plane C.

The first load transmitting portion 71 is located more forward and more rightward than the first lower engaging portion 63a. The second load transmitting portion 72 is located more forward and more leftward than the second lower engaging portion 63b.

The rear seat 19 comprises a third load transmitting portion 73 and a fourth load transmitting portion 74. The third load transmitting portion 73 and the fourth load transmitting portion 74 are each located above the bracket 46. The third load transmitting portion 73 and the fourth load transmitting portion 74 each contact the bracket 46. The third load transmitting portion 73 and the fourth load transmitting portion 74 each transmit load to the bracket 46.

The third load transmitting portion 73 and the fourth load transmitting portion 74 are located at the front part of the rear seat 19. The fourth load transmitting portion 74 is located leftward of the third load transmitting portion 73. The third load transmitting portion 73 is located rightward of the vehicle center plane C. The fourth load transmitting portion 74 is located leftward of the vehicle center plane C.

The third load transmitting portion 73 is located in front of the first lower engaging portion 63a in bottom view of the vehicle. The fourth load transmitting portion 74 is located in front of the second lower engaging portion 63b in bottom view of the vehicle. The third load transmitting portion 73 is located more forward and more leftward than the first load transmitting portion 71. The fourth load transmitting portion 74 is located more forward and more rightward than the second load transmitting portion 72.

The rear seat 19 comprises a hook 76. The hook 76 is fixed to the bracket 46.

The hook 76 is located at the front part of the rear seat 19. The hook 76 is located on the vehicle center plane C.

The hook 76 is located more leftward and more forward than the first lower engaging portion 63a. The hook 76 is located more rightward and more forward than the second lower engaging portion 63b. The hook 76 is located more leftward and more forward than the first load transmitting portion 71. The hook 76 is located more rightward and more forward than the second load transmitting portion 72. The hook 76 is located leftward of the third load transmitting portion 73 in bottom view of the vehicle. The hook 76 is located rightward of the fourth load transmitting portion 74 in bottom view of the vehicle.

The third load transmitting portion 73, the fourth load transmitting portion 74, and the hook 76 are lined-up in a row in the transverse direction Y in bottom view of the vehicle. Fig. 11 shows an imaginary straight line L1. The straight line L1 extends in the transverse direction Y. The third load transmitting portion 73, the hook 76, and the fourth load transmitting portion 74 are lined-up on the straight line L1 in bottom view of the vehicle.

The rear seat 19 comprises a pin 78. The pin 78 engages with the bracket 46.

The pin 78 is located at the front part of the rear seat 19. The pin 78 is located rightward of the vehicle center plane C.

The pin 78 is located more leftward and more forward than the first lower engaging portion 63a. The pin 78 is located more rightward and more forward than the second lower engaging portion 63b. The pin 78 is located more leftward and more forward than the first load transmitting portion 71. The pin 78 is located more rightward and more forward than the second load transmitting portion 72. The pin 78 is located leftward of the third load transmitting portion 73 in bottom view of the vehicle. The pin 78 is located rightward of the fourth load transmitting portion 74 in bottom view of the vehicle. The pin 78 is located rightward of the hook 76 in bottom view of the vehicle.

The third load transmitting portion 73, the fourth load transmitting portion 74, the hook 76, and the pin 78 are lined-up in a row in the transverse direction Y in bottom view of the vehicle. The third load transmitting portion 73, the fourth load transmitting portion 74, the hook 76, and the pin 78 are lined-up on the straight line L1 in bottom view of the vehicle.

Reference is made to Figs. 10 to 13. The first load transmitting portion 71 and the second load transmitting portion 72 each extend downward from the base board 61. The first load transmitting portion 71 comprises a lower end 71a. The second load transmitting portion 72 comprises a lower end 72a.

The first load transmitting portion 71 comprises a face 71b directed downward. The face 71b contacts the right seat frame 4R. The second load transmitting portion 72 comprises a face 72b directed downward. The face 72b contacts the left seat frame 4L. The faces 71b and 72b each extend rearward and upward in side view of the vehicle.

The third load transmitting portion 73 and the fourth load transmitting portion 74 each extend downward from the base board 61. The third load transmitting portion 73 comprises a lower end 73a. The fourth load transmitting portion 74 comprises a lower end 74a.

The third load transmitting portion 73 comprises a face 73b directed downward. The fourth load transmitting portion 74 comprises a face 74b directed downward. The faces 73b and 74b each contact the bracket 46. The faces 73b and 74b are each approximately horizontal.

The hook 76 extends downward from the base board 61. The hook 76 is of a ring shape. The hook 76 has a plate portion 76a and a hole 76b. The plate portion 76a is of a plate shape perpendicular in the transverse direction Y. The hole 76b passes through the plate portion 76a in the transverse direction Y. The hole 76b extends long in the up-down direction Z.

Fig. 12 shows a length H2. The length H2 corresponds to a length of the hole 76b in the up-down direction Z. The length H2 is smaller than the length H1b. In other words, the length H1b is larger than the length H2. The length H1a is also larger than the length H2, which illustration is omitted.

The pin 78 extends downward from the base board 61. The pin 78 comprises a lower end 78a. The pin 78 is of a columnar shape.

Reference is made to Figs. 12 and 13. Comparison is made between the lower engaging portion 63 and elements 71 to 74, 76, and 78 in terms of a height position.

The lower engaging portion 63 is entirely is located higher than the lower end 71a of the first load transmitting portion 71. The lower engaging portion 63 is entirely is located higher than the face 71b of the first load transmitting portion 71. The lower engaging portion 63 is entirely is located higher than the lower end 72a of the second load transmitting portion 72. The lower engaging portion 63 is entirely is located higher than the face 72b of the second load transmitting portion 72. The lower engaging portion 63 is entirely is located higher than the lower end 73a of the third load transmitting portion 73. The lower engaging portion 63 is entirely is located higher than the face 73b of the third load transmitting portion 73. The lower engaging portion 63 is entirely is located higher than the lower end 74a of the fourth load transmitting portion 74. The lower engaging portion 63 is entirely is located higher than the face 74b of the fourth load transmitting portion 74.

The lower engaging portion 63 is entirely located higher than the hole 76b of the hook 76. The lower engaging portion 63 is entirely located higher than the hook 76.

The lower engaging portion 63 is entirely is located higher than the lower end 78a of the pin 78.

Fig. 9 schematically shows portions 4Rc and 4Lc by dotted lines. The portion 4Rc is a part of the right seat frame 4R that contacts the first load transmitting portion 71. The portion 4Lc is a part of the left seat frame 4L that contacts the second load transmitting portion 72.

The portion 4Rc is located more forward than the first stay 51. The portion 4Rc is located more forward than the coupling portion 33. The portion 4Rc is located more rearward than the third stay 53. The portion 4Rc is located more rearward than the right leg portion 34. The portion 4Lc is located more forward than the second stay 52. The portion 4Lc is located more forward than the coupling portion 33. The portion 4Lc is located more rearward than the fourth stay 54. The portion 4Lc is located more rearward than the left leg portion 35.

Fig. 5 schematically shows portions 46a and 46b by dotted lines. The portion 46a is a part of the bracket 46 that contacts the third load transmitting portion 73. The portion 46b is a part of the bracket 46 that contacts the fourth load transmitting portion 74. The portions 46a and 46b are located more forward than the right leg portion 34 and the left leg portion 35, respectively. The portions 46a and 46b are located more forward than the bosses 34a and 35a, respectively.

The bracket 46 has a first hole 48. The first hole 48 is a long hole elongated in the longitudinal direction X. The hook 76 can enter the first hole 48 from the above of the bracket 46. The hook 76 can retreat from the first hole 48 to the above of the bracket 46.

The bracket 46 has a second hole 49. The pin 78 can enter the second hole 49 from the above of the bracket 46. The pin 78 can retreat from the second hole 49 to the above of the bracket 46. When the pin 78 is inserted into the second hole 49, the bracket 46 regulates horizontal movement of the pin 78 relative to the bracket 46.

Reference is made to Fig. 3. The straddled vehicle 1 comprises a locking mechanism 81. The locking mechanism 81 locks the hook 76. The locking mechanism 81 is supported by the bracket 46.

The locking mechanism 81 comprises a movable portion 81a that is movable in the transverse direction Y relative to the bracket 46. The movable portion 81a is movable between a locking position and a releasing position. Fig. 3 illustrates the movable portion 81a in the locking position. When the hook 76 is inserted into the first hole 48 and the movable portion 81a is in the locking position, the locking mechanism 81 locks the hook 76. Specifically, when the locking mechanism 81 locks the hook 76, the movable portion 81a is located in a hole 76b of the hook 76. When the locking mechanism 81 locks the hook 76, the locking mechanism 81 restrains the hook 76 from retreating from the first hole 48. In other words, when the locking mechanism 81 locks the hook 76, the locking mechanism 81 restrains the hook 76 from moving upward relative to the bracket 46. When the locking mechanism 81 locks the hook 76, the rear seat 19 is fixed to the bracket 46. When the movable portion 81a is located in the releasing position, the locking mechanism 81 releases lock of the hook 76. Specifically, when the locking mechanism 81 releases lock of the hook 76, the movable portion 83a is not located in the hole 76b of the hook 76. When the locking mechanism 81 releases lock of the hook 76, the locking mechanism 81 allows the hook 76 to enter and retreat from the first hole 48. When the locking mechanism 81 releases lock of the hook 76, the rear seat 19 is movable relative to the bracket 46.

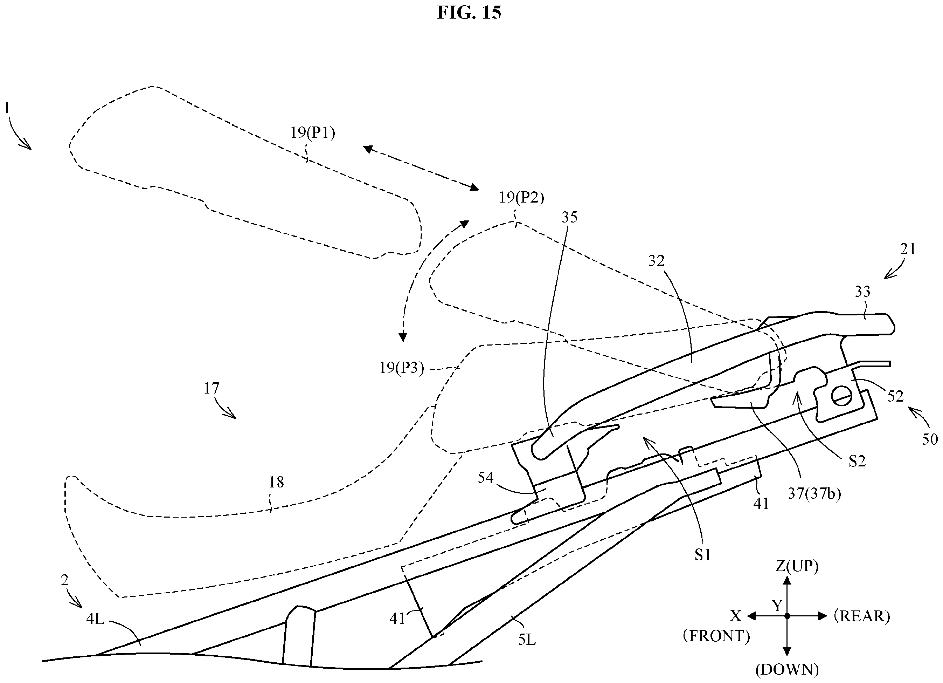

Fig. 15 is a view illustrating procedures of attaching and detaching the rear seat 19. Fig. 15 shows a first position P1, a second position P2, and a third position P3 of the rear seat 19. Fig. 15 shows the rear seat 19 in a simple manner. The first position P1 is a position of the rear seat 19 completely removed from the straddled vehicle 1. The third position P3 is a position of the rear seat 19 attached to the straddled vehicle 1.

The following explains procedures for attaching the rear seat 19.

Firstly, the rear seat 19 is moved from the first position P1 to the second position P2. That is, the rear seat 19 is inclined such that the rear part of the rear seat 19 is lower than the front part of the rear seat 19. The rear part of the rear seat 19 is moved rearward toward the rear grip 21. The lower engaging portion 63 enters below the position regulator 37. The lower engaging portion 63 contacts the position regulator 37.

Secondary, the rear seat 19 is moved from the second position P2 to the third position P3. That is, the front part of the rear seat 19 is moved downward. This causes the first load transmitting portion 71 to contact the right seat frame 4R. The second load transmitting portion 72 contacts the left seat frame 4L. The third load transmitting portion 73 and the fourth load transmitting portion 74 each contact the bracket 46. The hook 76 is inserted into the first hole 48. The pin 78 is inserted into the second hole 49.

Thirdly, the locking mechanism 81 locks the hook 76. Thereby, the rear seat 19 is held at the third position P3. The first space S1 is closed.

The procedure for removing the rear seat 19 is the reverse of the procedure for attaching the rear seat 19. Firstly, the locking mechanism 81 releases lock of the hook 76. Secondary, the rear seat 19 is moved from the third position P3 to the second position P2. Thereby, the hook 76 is pulled out of the first hole 48. The pin 78 is pulled out of the second hole 49. Thirdly, the rear seat 19 is moved from the second position P2 to the first position P1. Thereby, the lower engaging portion 63 is separated from the position regulator 37. The first space S1 is open upward.

### 6. Advantageous effects

The straddled vehicle 1 comprises the right seat frame 4R, the left seat frame 4L, the seat 17, the stay 50, and the rear grip 21. The left seat frame 4L is located leftward of the right seat frame 4R. The seat 17 is located above the right seat frame 4R and the left seat frame 4L. The stay 50 is supported by the right seat frame 4R and the left seat frame 4L. The rear grip 21 is supported by the stay 50. This can raise a height position of the rear grip 21 easily. Accordingly, a height position of the seat 17 can be raised easily. Consequently, the first space S1 located below the seat 17 can be made large easily.

The stay 50 comprises the first stay 51 and the second stay 52. The first stay 51 is connected to the right seat frame 4R. The second stay 52 is connected to the left seat frame 4L. The first stay 51 and the second stay 52 are located behind the seat 17 in plan view of the vehicle. Accordingly, the first stay 51 and the second stay 52 are located outside the first space S1. Consequently, the first stay 51 and the second stay 52 never prevent usage of the first space S1.

The stay 50 comprises the third stay 53 and the fourth stay 54. The third stay 53 is connected to the right seat frame 4R. The fourth stay 54 is connected to the left seat frame 4L. The third stay 53 and the fourth stay 54 are separated from each other. That is, the stay 50 has no part extending from the third stay 53 to the fourth stay 54 in the transverse direction Y. Consequently, the third stay 53 and the fourth stay 54 hardly prevent usage of the first space S1.

The rear grip 21 comprises the right grip portion 31, the left grip portion 32, and the coupling portion 33. The right grip portion 31 is located rightward of the right seat frame 4R and the seat 17 in plan view of the vehicle. The left grip portion 32 is located leftward of the left seat frame 4L and the seat 17 in plan view of the vehicle. The coupling portion 33 is located behind the seat 17 in plan view of the vehicle. Accordingly, the right grip portion 31, the left grip portion 32, and the coupling portion 33 are located outside the first space S1. Accordingly, the right grip portion 31, the left grip portion 32, and the coupling portion 33 never prevent usage of the first space S1.

The coupling portion 33 is connected to the first stay 51 and the second stay 52. The coupling portion 33 couples the right seat frame 4R and the left seat frame 4L via the first stay 51 and the second stay 52. Accordingly, the first stay 51 and the second stay 52 can support the coupling portion 33 rigidly.

The right grip portion 31 and the left grip portion 32 each extend in the longitudinal direction X. The right grip portion 31 has the front end 31a and the rear end 31b. The left grip portion 32 has the front end 32a and the rear end 32b. The coupling portion 33 extends from the rear end 31b of the right grip portion 31 to the rear end 32b of the left grip portion 32 in the transverse direction Y. The rear end 31b of the right grip portion 31 and the rear end 32b of the left grip portion 32 are supported by the first stay 51 and the second stay 52 via the coupling portion 33. The rear grip 21 comprises the right leg portion 34 and the left leg portion 35. The right leg portion 34 extends from the front end 31a of the right grip portion 31 to the third stay 53. The right leg portion 34 is connected to the third stay 53. The front end 31a of the right grip portion 31 is supported by the third stay 53 via the right leg portion 34. The left leg portion 35 extends from the front end 32a of the left grip portion 32 to the fourth stay 54. The left leg portion 35 is connected to the fourth stay 54. The front end 32a of the left grip portion 32 is supported by the fourth stay 54 via the left leg portion 35. As described above, the rear end 31b and the front end 31a of the right grip portion 31 are supported by the first stay 51 and the third stay 53, respectively. Accordingly, the first stay 51 and the third stay 53 can each support the right grip portion 31 rigidly. Likewise, the rear end 32b and the front end 32a of the left grip portion 32 are supported by the second stay 52 and the fourth stay 54, respectively. Accordingly, the second stay 52 and the fourth stay 54 can each support the left grip portion 32 rigidly.

The coupling portion 33 overlaps the right seat frame 4R and the left seat frame 4L in plan view of the vehicle. The coupling portion 33 is supported by the right seat frame 4R and the left seat frame 4L via the first stay 51 and the second stay 52. Accordingly, the right seat frame 4R and the left seat frame 4L can support the coupling portion 33 more rigidly.

The rear grip 21 forms the inner space T. The inner space T contacts the left edge 31c of the right grip portion 31, the right edge 32c of the left grip portion 32, and the front edge 33a of the coupling portion 33 in plan view of the vehicle. The inner space T opens forward of the rear grip 21. Consequently, the rear grip 21 hardly prevents usage of the first space S1. Consequently, the rider can use the first space S1 easily. For example, the rider can easily store his/her belongings in the first space S1.

As described above, with the straddled vehicle 1, the easily available first space S1 can be formed below the seat 17. Moreover, the first space S1 can suitably have a sufficiently large size. Moreover, the rear grip 21 can be supported rigidly.

The distance E1 is equal to or longer than the length of the right grip portion 31 in the longitudinal direction X. Accordingly, the first stay 51 and the third stay 53 can each support the right grip portion 31 rigidly. The distance E2 is equal to or longer than the length of the left grip portion 32 in the longitudinal direction X. Accordingly, the second stay 52 and the fourth stay 54 can each support the left grip portion 32 rigidly. Consequently, the stay 50 can support the rear grip 21 rigidly.

The third stay 53 extends upward from the right seat frame 4R. The fourth stay 54 extends upward from the left seat frame 4L. The separation distance D3 is approximately equal to the separation distance D1. Consequently, the third stay 53 and the fourth stay 54 much hardly prevent usage of the first space S1.

The separation distance D5 is approximately equal to the separation distance D1. Accordingly, the right leg portion 34 and the left leg portion 35 much hardly prevent usage of the first space S1.

The first stay 51 and the second stay 52 are separated from each other. Accordingly, the first stay 51 and the second stay 52 hardly prevent usage of the second space S2 below the coupling portion 33.

The second space S2 is located behind the first space S1. The second space S2 and the first space S1 are connected. Consequently, the second space S2 is available easily.

The first stay 51 extends upward from the right seat frame 4R. The second stay 52 extends upward from the left seat frame 4L. The separation distance D2 is approximately equal to the separation distance D1. Consequently, the first stay 51 and the second stay 52 much hardly prevent usage of the second space S2.

The separation distance D4 is approximately equal to the separation distance D1. Consequently, the bosses 36a and 36b much hardly prevent usage of the second space S2.

The coupling portion 33 is of a flat plate shape extending in the transverse direction Y. This can easily enhance rigidity of the coupling portion 33. Consequently, the coupling portion 33 can support the right grip portion 31 and the left grip portion 32 more rigidly.

The seat 17 comprises the front seat 18 and the rear seat 19. The rear seat 19 is located behind the front seat 18. The rear seat 19 is separate from the front seat 18. This can cause the first space S1 to open and close easily. Consequently, the first space S1 is available easily. Especially, a part of the first space S1 positioned below the rear seat 19 can be used easily.

The rear grip 21 comprises the position regulator 37. The position regulator 37 contacts the rear seat 19. The position regulator 37 regulates upward movement of the rear seat 19 relative to the rear grip 21. Accordingly, the rear grip 21 can keep the rear seat 19 at a suitable position.

The position regulator 37 is located higher than the right leg portion 34 and the left leg portion 35. As described above, the position regulator 37 is located at a relatively high position. Consequently, the position regulator 37 hardly prevents usage of the first space S1.

The position regulator 37 is supported while being suspended from the coupling portion 33. The coupling portion 33 is located higher than the position regulator 37. As described above, the member configured to support the position regulator 37 is the coupling portion 33. The member configured to support the position regulator 37 is located higher than the position regulator 37. That is, the member configured to support the position regulator 37 is not located below, in front of, behind, rightward of or leftward of the position regulator 37. Consequently, the rear grip 21 hardly prevents usage of the first space S1.

The rear grip 21 comprises no part below the position regulator 37. Accordingly, a part of the first space S1 positioned below the position regulator 37 can also be used effectively.

The rear seat 19 comprises a lower engaging portion 63. The lower engaging portion 63 is located below the position regulator 37. The lower engaging portion 63 contacts the position regulator 37. The position regulator 37 regulates movement of the lower engaging portion 63 to a position higher than the position regulator 37. Consequently, the position regulator 37 can suitably regulate upward movement of the rear seat 19 relative to the rear grip 21.

The lower engaging portion 63 comprises the rear faces 65a and 65b. The rear faces 65a and 65b prevent the lower engaging portion 63 from being located above the position regulator 37. Consequently, the lower engaging portion 63 can always contact the position regulator 37 at the correct position.

The lengths H1a and H1b are each relatively large. For example, the lengths H1a and H1b are each larger than the length H2. Accordingly, if the lower engaging portion 63 is located above the position regulator 37, it is hard to attach the rear seat 19. For example, if the lower engaging portion 63 is located above the position regulator 37, it is hard to insert the hook 76 into the first hole 48. If the lower engaging portion 63 is located above the position regulator 37, it is hard to lock the hook 76 by the locking mechanism 81. Consequently, the rider can find easily that the lower engaging portion 63 is located at the incorrect position.

The rear seat 19 comprises the first load transmitting portion 71 and the second load transmitting portion 72. The first load transmitting portion 71 is located above the right seat frame 4R. The first load transmitting portion 71 contacts the right seat frame 4R. Accordingly, the first load transmitting portion 71 can transmit load of the rear seat 19 to the right seat frame 4R suitably. The second load transmitting portion 72 is located above the left seat frame 4L. The second load transmitting portion 72 contacts the left seat frame 4L. Accordingly, the second load transmitting portion 72 can transmit load of the rear seat 19 to the left seat frame 4L suitably.

The lower engaging portion 63 is located higher than the lower end 71a of the first load transmitting portion 71 and the lower end 72a of the second load transmitting portion 72. As described above, the lower engaging portion 63 is located at a relatively high position. Accordingly, a sufficiently large size of the first space S1 can be obtained suitably.

The position regulator 37 comprises the first position regulator 37a and the second position regulator 37b. The lower engaging portion 63 comprises the first lower engaging portion 63a and the second lower engaging portion 63b. The first lower engaging portion 63a contacts the first position regulator 37a. The second lower engaging portion 63b contacts the second position regulator 37b. Here, the second position regulator 37b is located leftward of the first position regulator 37a. The second lower engaging portion 63b is located leftward of the first lower engaging portion 63a. Consequently, the position regulator 37 can regulate upward movement of the rear seat 19 relative to the rear grip 21 appropriately. For example, the position regulator 37 can suitably suppress swing of the rear seat 19 around an axis passing through the rear seat 19 and parallel to the longitudinal direction X.

The position regulator 37 is not located on the vehicle center plane C. Consequently, the position regulator 37 hardly prevents usage of the first space S1.

The separation distance D6 is relatively large. Consequently, the position regulator 37 much hardly prevents usage of the first space S1.

The rear seat 19 comprises the hook 76. The hook 76 is located more leftward and more forward than the first lower engaging portion 63a. The hook 76 is located more rightward and more forward than the second lower engaging portion 63b. The straddled vehicle 1 comprises the locking mechanism 81. The locking mechanism 81 locks the hook 76. Accordingly, the locking mechanism 81, the first position regulator 37a, and the second position regulator 37b can hold the rear seat 19 suitably. For example, the swing of the rear seat 19 around an axis passing through the hook 76 and parallel to the up-down direction Z can be suppressed suitably.

The rear seat 19 comprises the third load transmitting portion 73 and the fourth load transmitting portion 74. The straddled vehicle 1 comprises the bracket 46. The bracket 46 is located below the third load transmitting portion 73 and the fourth load transmitting portion 74. The bracket 46 contacts the third load transmitting portion 73 and the fourth load transmitting portion 74. Accordingly, the third load transmitting portion 73 and the fourth load transmitting portion 74 can transmit load of the rear seat 19 to the bracket 46 suitably.

The third load transmitting portion 73 is located rightward of the hook 76 in bottom view of the vehicle. The fourth load transmitting portion 74 is located leftward of the hook 76 in bottom view of the vehicle. The third load transmitting portion 73, the hook 76, and the fourth load transmitting portion 74 are lined-up in the transverse direction Y in bottom view of the vehicle. Accordingly, the third load transmitting portion 73 and the fourth load transmitting portion 74 can relieve an external force applied to the hook 76 suitably. Accordingly, the third load transmitting portion 73 and the fourth load transmitting portion 74 can relax stress on the hook 76 suitably. Consequently, the locking mechanism 81 can lock the hook 76 suitably.

The rear seat 19 comprises the first supporting portion 67a and the second supporting portion 67b. The first supporting portion 67a is located leftward of the first position regulator 37a. The first supporting portion 67a contacts the first position regulator 37a. The first position regulator 37a regulates movement of the first supporting portion 67a to a position more rightward than the first position regulator 37a. The second supporting portion 67b is located rightward of the second position regulator 37b. The second supporting portion 67b contacts the second position regulator 37b. The second position regulator 37b regulates movement of the second supporting portion 67b to a position more leftward than the second position regulator 37b. Consequently, the position regulator 37 can suitably regulate movement of the rear seat 19 in the transverse direction Y relative to the rear grip 21.

The straddled vehicle 1 comprises the tray 41. The tray 41 is located below the seat 17, leftward of the right seat frame 4R and rightward of the left seat frame 4L. Accordingly, the first space S1 can effectively be used as a cargo room.

The tray 41 extends from a position more forward than the rear grip 21 to a position more rearward than the right leg portion 34 and the left leg portion 35. As described above, the rear grip 21 hardly prevents usage of the first space S1. Accordingly, the first space S1 can effectively be used as a storage space.

The tray 41 comprises the base 42. The rear grip 21 does not overlap the base 42 in plan view of the vehicle. Accordingly, the rider can easily place his/her belongings on the tray 41. The rider can easily take out his/her belongings on the tray 41.

This invention is not limited to the foregoing embodiment, but may be modified as follows, which include optional modifications that don't affect the vehicle as claimed.
(1) In the embodiment described above, the lower engaging portion 63 comprises the rear faces 65a and 65b serving as the blocking portion. The position regulator 37 does not include any part serving as the blocking portion. At least either the position regulator 37 or the lower engaging portion 63 may include a blocking portion. For example, the position regulator 37 may include a blocking portion. Specifically, the position regulator 37 may include a plate portion and a wall. The plate portion is of an approximately flat plate shape. The plate portion has a bottom face. The plate portion is located above the lower engaging portion 63. The bottom face of the plate portion contacts the lower engaging portion 63. The wall extends upward from the bottom face of the plate portion. The wall prevents the lower engaging portion 63 from being located above the position regulator 37. The wall of the position regulator 37 is one example of the blocking portion in the present invention.
(2) In the embodiment described above, the belongings of the rider can be placed on the tray 41. Electrical components of the straddled vehicle 1 can also be placed on the tray 41.
(3) In the embodiment described above, especially a part of the first space S1 positioned below the rear seat 19 is available easily. At least either a part of the first space S1 positioned below the front seat 18 or a part of the first space S1 positioned below the rear seat 19 may be configured to be available easily. That is, an easily available space may be formed at least either at a position below the front seat 18 or at a position below the rear seat 19.
(4) In the embodiment described above, the straddled vehicle 1 has been illustrated as an example of street type vehicles. The straddled vehicle 1 may be changed to vehicles of other types, such as a sport type or a vehicle for irregular grounds (all-terrain vehicle).
(5) In the embodiment described above, the number of front wheels 11 included in the straddled vehicle 1 is one. The number of front wheels 11 included in the straddled vehicle 1 may be two. In the foregoing embodiment, the number of rear wheels 28 included in the straddled vehicle 1 is one. The number of rear wheels 28 included in the straddled vehicle 1 may be two.
(6) In the embodiment described above, the straddled vehicle 1 comprises the engine (internal combustion engine) 13 as a power source. The straddled vehicle 1 may have an electric motor as another power source in addition to the engine 13. For example, the straddled vehicle 1 may have an electric motor as a power source instead of the engine 13.

The scope of the present invention and/or disclosure is to be determined solely by the following claims.

## Claims

1. A straddled vehicle (1) comprising:
a right seat frame (4R);
a left seat frame (4L) located more leftward than the right seat frame (4R);
a seat (17) located above the right seat frame (4R) and the left seat frame (4L);
a stay (50) supported by the right seat frame (4R) and the left seat frame (4L); and
a rear grip (21) supported by the stay (50);
the stay (50) comprising:
a first stay (51) located entirely behind the entirety of the seat (17) in plan view of the vehicle and connected to the right seat frame (4R);
a second stay (52) located entirely behind the entirety of the seat (17) in plan view of the vehicle and connected to the left seat frame (4L);
a third stay (53) located in front of the first stay (51) in plan view of the vehicle and connected to the right seat frame (4R); and
a fourth stay (54) located in front of the second stay (52) in plan view of the vehicle and connected to the left seat frame (4L);
the third stay (53) and the fourth stay (54) being separated from each other,
the rear grip (21) comprising:
a right grip portion (31) located rightward of the right seat frame (4R) and the seat (17) in plan view of the vehicle and extending in a longitudinal direction (X) of the vehicle;
a left grip portion (32) located leftward of the left seat frame (4L) and the seat (17) in plan view of the vehicle and extending in the longitudinal direction (X) of the vehicle;
a coupling portion (33) located behind the seat (17) in plan view of the vehicle, extending from a rear end (31b) of the right grip portion (31) to a rear end (32b) of the left grip portion (32) in a transverse direction (Y) of the vehicle, directly connected to the first stay (51) and the second stay (52), and coupling the right seat frame (4R) to the left seat frame (4L) via the first stay (51) and the second stay (52);
a right leg portion (34) extending from a front end (31a) of the right grip portion (31) to the third stay (53) and connected to the third stay (53); and
a left leg portion (35) extending from a front end (32a) of the left grip portion (32) to the fourth stay (54) and connected to the fourth stay (54);
the coupling portion (33) overlapping the right seat frame (4R) and the left seat frame (4L) in plan view of the vehicle, and
the rear grip (21) forming an inner space (T) configured to contact a left edge (31c) of the right grip portion (31), a right edge (32c) of the left grip portion (32), and a front edge (33a) of the coupling portion (33) in plan view of the vehicle, and to open forward of the rear grip (21).

2. The straddled vehicle (1) according to claim 1, wherein
the third stay (53) extends upward from the right seat frame (4R),
the fourth stay (54) extends upward from the left seat frame (4L), and
a separation distance (D3) between the third stay (53) and the fourth stay (54) in the transverse direction (Y) of the vehicle is approximately or substantially equal to a separation distance (D1) between the right seat frame (4R) and the left seat frame (4L) in the transverse direction (Y) of the vehicle.

3. The straddled vehicle (1) according to claim 1 or 2, wherein
a separation distance (D5) between the right leg portion (34) and the left leg portion (35) in the transverse direction (Y) of the vehicle is approximately or substantially equal to a separation distance (D1) between the right seat frame (4R) and the left seat frame (4L) in the transverse direction (Y) of the vehicle.

4. The straddled vehicle (1) according to any one of claims 1 to 3, wherein
the first stay (51) and the second stay (52) are separated from each other,
the first stay (51) extends upward from the right seat frame (4R),
the second stay (52) extends upward from the left seat frame (4L), and
a separation distance (D2) between the first stay (51) and the second stay (52) in the transverse direction (Y) of the vehicle is approximately equal to a separation distance (D1) between the right seat frame (4R) and the left seat frame (4L) in the transverse direction (Y) of the vehicle.

5. The straddled vehicle (1) according to any one of claims 1 to 4, wherein
the coupling portion (33) is of a flat plate shape extending in the transverse direction (Y) of the vehicle.

6. The straddled vehicle (1) according to any one of claims 1 to 5, wherein
the seat (17) comprises:
a front seat (18), and
a rear seat (19) located behind the front seat (18),
the rear seat (19) is separate from the front seat (18), and
the rear grip (21) comprises
a position regulator (37) configured to contact the rear seat (19) to regulate upward movement of the rear seat (19) relative to the rear grip (21).

7. The straddled vehicle (1) according to claim 6, wherein
the position regulator (37) is located higher than the right leg portion (34) and the left leg portion (35).

8. The straddled vehicle (6) according to claim 6 or 7, wherein
the position regulator (37) is supported while being suspended from the coupling portion (33), and
the coupling portion (33) is located higher than the position regulator (37).

9. The straddled vehicle (1) according to any one of claims 6 to 8, wherein
the rear seat (19) comprises:
a lower engaging portion (63) located below the position regulator (37) and configured to contact the position regulator (37).

10. The straddled vehicle (1) according to claim 9, wherein
at least either the lower engaging portion (63) or the position regulator (37) comprises a blocking portion (65a, 65b) configured to prevent the lower engaging portion (63) from being located above the position regulator (37).

11. The straddled vehicle (1) according to claim 9 or 10, wherein
the rear seat (19) comprises:
a first load transmitting portion (71) located above the right seat frame (4R) and configured to contact the right seat frame (4R) to transmit load to the right seat frame (4R); and
a second load transmitting portion (72) located above the left seat frame (4L) and configured to contact the left seat frame (4L) to transmit load to the left seat frame (4L), and
the lower engaging portion (63) is located higher than a lower end (71a) of the first load transmitting portion (71) and a lower end (72a) of the second load transmitting portion (72).

12. The straddled vehicle (1) according to any one of claims 9 to 11, wherein
the position regulator (37) comprises:
a first position regulator (37a) and
a second position regulator (37b) located leftward of the first position regulator (37a), and
the lower engaging portion (63) comprises:
a first lower engaging portion (63a) configured to contact the first position regulator (37a), and
a second lower engaging portion (63b) located leftward of the first lower engaging portion (63a) and configured to contact the second position regulator (37b).

13. The straddled vehicle (1) according to claim 12, wherein
the rear seat (19) comprises a hook (76), and
the straddled vehicle (1) further comprises a locking mechanism (81) configured to lock the hook (76),
the hook (76) being located more leftward and more forward than the first lower engaging portion (63a), and
the hook (76) being located more rightward and more forward than the second lower engaging portion (63b).

14. The straddled vehicle (1) according to claim 13, wherein
the rear seat (19) comprises:
a third load transmitting portion (73) located rightward of the hook (76) in bottom view of the vehicle, and
a fourth load transmitting portion (74) located leftward of the hook (76) in bottom view of the vehicle,
the third load transmitting portion (73), the hook (76), and the fourth load transmitting portion (74) are lined-up in the transverse direction (Y) of the vehicle in bottom view of the vehicle, and
the straddled vehicle (1) further comprises:
a bracket (46) located below the third load transmitting portion (73) and the fourth load transmitting portion (74), and configured to contact the third load transmitting portion (73) and the fourth load transmitting portion (74).

15. The straddled vehicle (1) according to any one of claims 6 to 14, wherein
the rear seat (19) comprises:
a right engaging portion (67b) located rightward of the position regulator (37) and configured to contact the position regulator (37), and
a left engaging portion (67a) located leftward of the position regulator (37) and configured to contact the position regulator (37).

## Patentansprüche

1. Spreizsitzfahrzeug (1), umfassend:
einen rechten Sitzrahmen (4R);
einen linken Sitzrahmen (4L), der weiter links als der rechte Sitzrahmen (4R) angeordnet ist;
einen Sitz (17), der oberhalb des rechten Sitzrahmens (4R) und des linken Sitzrahmens (4L) angeordnet ist;
eine Strebe (50), die durch den rechten Sitzrahmen (4R) und den linken Sitzrahmen (4L) getragen wird; und
einen hinteren Griff (21), der durch die Strebe (50) getragen wird;
wobei die Strebe (50) Folgendes umfasst:
eine erste Strebe (51), die in der Draufsicht auf das Fahrzeug vollständig hinter der Gesamtheit des Sitzes (17) angeordnet und mit dem rechten Sitzrahmen (4R) verbunden ist;
eine zweite Strebe (52), die in der Draufsicht auf das Fahrzeug vollständig hinter der Gesamtheit des Sitzes (17) angeordnet und mit dem linken Sitzrahmen (4L) verbunden ist;
eine dritte Strebe (53), die in der Draufsicht auf das Fahrzeug vor der ersten Strebe (51) angeordnet und mit dem rechten Sitzrahmen (4R) verbunden ist; und
eine vierte Strebe (54), die in der Draufsicht auf das Fahrzeug vor der zweiten Strebe (52) angeordnet und mit dem linken Sitzrahmen (4L) verbunden ist;
wobei die dritte Strebe (53) und die vierte Strebe (54) voneinander getrennt sind,
wobei der hintere Griff (21) Folgendes umfasst:
einen rechten Griffabschnitt (31), der in der Draufsicht auf das Fahrzeug rechts vom rechten Sitzrahmen (4R) und dem Sitz (17) angeordnet ist und sich in einer Längsrichtung (X) des Fahrzeugs erstreckt;
einen linken Griffabschnitt (32), der in der Draufsicht auf das Fahrzeug links vom linken Sitzrahmen (4L) und dem Sitz (17) angeordnet ist und sich in der Längsrichtung (X) des Fahrzeugs erstreckt;
einen Kopplungsabschnitt (33), der in der Draufsicht auf das Fahrzeug hinter dem Sitz (17) angeordnet ist, sich in einer Querrichtung (Y) des Fahrzeugs von einem hinteren Ende (31b) des rechten Griffabschnitts (31) zu einem hinteren Ende (32b) des linken Griffabschnitts (32) erstreckt, direkt mit der ersten Strebe (51) und der zweiten Strebe (52) verbunden ist und den rechten Sitzrahmen (4R) über die erste Strebe (51) und die zweite Strebe (52) mit dem linken Sitzrahmen (4L) koppelt;
einen rechten Beinabschnitt (34), der sich von einem vorderen Ende (31a) des rechten Griffabschnitts (31) zur dritten Strebe (53) erstreckt und mit der dritten Strebe (53) verbunden ist; und
einen linken Beinabschnitt (35), der sich von einem vorderen Ende (32a) des linken Griffabschnitts (32) zur vierten Strebe (54) erstreckt und mit der vierten Strebe (54) verbunden ist;
wobei der Kopplungsabschnitt (33) in der Draufsicht auf das Fahrzeug den rechten Sitzrahmen (4R) und den linken Sitzrahmen (4L) überlappt, und
wobei der hintere Griff (21) einen Innenraum (T) bildet, der so konfiguriert ist, dass er in der Draufsicht auf das Fahrzeug eine linke Kante (31c) des rechten Griffabschnitts (31), eine rechte Kante (32c) des linken Griffabschnitts (32) und eine vordere Kante (33a) des Kopplungsabschnitts (33) berührt und sich vor dem hinteren Griff (21) öffnet.

2. Spreizsitzfahrzeug (1) nach Anspruch 1, wobei
die dritte Strebe (53) sich vom rechten Sitzrahmen (4R) nach oben erstreckt,
die vierte Strebe (54) sich vom linken Sitzrahmen (4L) nach oben erstreckt, und
ein Trennungsabstand (D3) zwischen der dritten Strebe (53) und der vierten Strebe (54) in der Querrichtung (Y) des Fahrzeugs annähernd oder im Wesentlichen gleich einem Trennungsabstand (D1) zwischen dem rechten Sitzrahmen (4R) und dem linken Sitzrahmen (4L) in der Querrichtung (Y) des Fahrzeugs ist.

3. Spreizsitzfahrzeug (1) nach Anspruch 1 oder 2, wobei
ein Trennungsabstand (D5) zwischen dem rechten Beinabschnitt (34) und dem linken Beinabschnitt (35) in der Querrichtung (Y) des Fahrzeugs annähernd oder im Wesentlichen gleich einem Trennungsabstand (D1) zwischen dem rechten Sitzrahmen (4R) und dem linken Sitzrahmen (4L) in der Querrichtung (Y) des Fahrzeugs ist.

4. Spreizsitzfahrzeug (1) nach einem der Ansprüche 1 bis 3, wobei
die erste Strebe (51) und die zweite Strebe (52) voneinander getrennt sind,
die erste Strebe (51) sich vom rechten Sitzrahmen (4R) nach oben erstreckt,
die zweite Strebe (52) sich vom linken Sitzrahmen (4L) nach oben erstreckt, und
ein Trennungsabstand (D2) zwischen der ersten Strebe (51) und der zweiten Strebe (52) in der Querrichtung (Y) des Fahrzeugs annähernd gleich einem Trennungsabstand (D1) zwischen dem rechten Sitzrahmen (4R) und dem linken Sitzrahmen (4L) in der Querrichtung (Y) des Fahrzeugs ist.

5. Spreizsitzfahrzeug (1) nach einem der Ansprüche 1 bis 4, wobei
der Kopplungsabschnitt (33) die Form einer flachen Platte hat, die sich in der Querrichtung (Y) des Fahrzeugs erstreckt.

6. Spreizsitzfahrzeug (1) nach einem der Ansprüche 1 bis 5, wobei der Sitz (17) Folgendes umfasst:
einen Vordersitz (18), und
einen Rücksitz (19), der hinter dem Vordersitz (18) angeordnet ist,
wobei der Rücksitz (19) vom Vordersitz (18) getrennt ist, und
der hintere Griff (21) Folgendes umfasst:
einen Positionsregler (37), der so konfiguriert ist, dass er den Rücksitz (19) berührt, um die Aufwärtsbewegung des Rücksitzes (19) relativ zum hinteren Griff (21) zu regeln.

7. Spreizsitzfahrzeug (1) nach Anspruch 6, wobei
der Positionsregler (37) höher als der rechte Beinabschnitt (34) und der linke Beinabschnitt (35) angeordnet ist.

8. Spreizsitzfahrzeug (6) nach Anspruch 6 oder 7, wobei
der Positionsregler (37) getragen wird, während er am Kopplungsabschnitt (33) aufgehängt ist, und
der Kopplungsabschnitt (33) höher als der Positionsregler (37) angeordnet ist.

9. Spreizsitzfahrzeug (1) nach einem der Ansprüche 6 bis 8, wobei
der Rücksitz (19) Folgendes umfasst:
einen unteren Eingriffsabschnitt (63), der unterhalb des Positionsreglers (37) angeordnet und so konfiguriert ist, dass er den Positionsregler (37) berührt.

10. Spreizsitzfahrzeug (1) nach Anspruch 9, wobei
mindestens entweder der untere Eingriffsabschnitt (63) oder der Positionsregler (37) einen Sperrabschnitt (65a, 65b) umfasst, der so konfiguriert ist, dass er verhindert, dass der untere Eingriffsabschnitt (63) oberhalb des Positionsreglers (37) angeordnet wird.

11. Spreizsitzfahrzeug (1) nach Anspruch 9 oder 10, wobei
der Rücksitz (19) Folgendes umfasst:
einen ersten Lastübertragungsabschnitt (71), der oberhalb des rechten Sitzrahmens (4R) angeordnet und so konfiguriert ist, dass er den rechten Sitzrahmen (4R) berührt, um Last auf den rechten Sitzrahmen (4R) zu übertragen; und
einen zweiten Lastübertragungsabschnitt (72), der oberhalb des linken Sitzrahmens (4L) angeordnet und so konfiguriert ist, dass er den linken Sitzrahmen (4L) berührt, um Last auf den linken Sitzrahmen (4L) zu übertragen, und
der untere Eingriffsabschnitt (63) höher als ein unteres Ende (71a) des ersten Lastübertragungsabschnitts (71) und ein unteres Ende (72a) des zweiten Lastübertragungsabschnitts (72) angeordnet ist.

12. Spreizsitzfahrzeug (1) nach einem der Ansprüche 9 bis 11, wobei
der Positionsregler (37) Folgendes umfasst:
einen ersten Positionsregler (37a) und
einen zweiten Positionsregler (37b), der links vom ersten Positionsregler (37a) angeordnet ist, und
der untere Eingriffsabschnitt (63) Folgendes umfasst:
einen ersten unteren Eingriffsabschnitt (63a), der dafür konfiguriert ist, den ersten Positionsregler (37a) zu berühren, und
einen zweiten unteren Eingriffsabschnitt (63b), der links vom ersten unteren Eingriffsabschnitt (63a) angeordnet und dafür konfiguriert ist, den zweiten Positionsregler (37b) zu berühren.

13. Spreizsitzfahrzeug (1) nach Anspruch 12, wobei
der Rücksitz (19) einen Haken (76) umfasst, und
das Spreizsitzfahrzeug (1) ferner einen Verriegelungsmechanismus (81) umfasst, der dafür konfiguriert ist, den Haken (76) zu verriegeln,
der Haken (76) weiter links und weiter vom angeordnet ist als der erste untere Eingriffsabschnitt (63a), und
der Haken (76) weiter rechts und weiter vorn als der zweite untere Eingriffsabschnitt (63b) angeordnet ist.

14. Spreizsitzfahrzeug (1) nach Anspruch 13, wobei
der Rücksitz (19) Folgendes umfasst:
einen dritten Lastübertragungsabschnitt (73), der in der Ansicht von unten des Fahrzeugs rechts vom Haken (76) angeordnet ist, und
einen vierten Lastübertragungsabschnitt (74), der in der Ansicht von unten des Fahrzeugs links vom Haken (76) angeordnet ist,
der dritte Lastübertragungsabschnitt (73), der Haken (76) und der vierte Lastübertragungsabschnitt (74) in der Ansicht von unten in der Querrichtung (Y) des Fahrzeugs aufgereiht sind, und
das Spreizsitzfahrzeug (1) ferner Folgendes umfasst:
einen Bügel (46), der unterhalb des dritten Lastübertragungsabschnitts (73) und des vierten Lastübertragungsabschnitts (74) angeordnet und so konfiguriert ist, dass er den dritten Lastübertragungsabschnitt (73) und den vierten Lastübertragungsabschnitt (74) berührt.

15. Spreizsitzfahrzeug (1) nach einem der Ansprüche 6 bis 14, wobei
der Rücksitz (19) Folgendes umfasst:
einen rechten Eingriffsabschnitt (67b), der rechts vom Positionsregler (37) angeordnet und dafür konfiguriert ist, den Positionsregler (37) zu berühren, und
einen linken Eingriffsabschnitt (67a), der links vom Positionsregler (37) angeordnet und dafür konfiguriert ist, den Positionsregler (37) zu berühren.

## Revendications

1. Véhicule à enfourcher (1), comprenant :
un cadre de siège de droite (4R) ;
un cadre de siège de gauche (4L) disposé davantage vers la gauche que le cadre de siège de droite (4R) ;
un siège (17) disposé au-dessus du cadre de siège de droite (4R) et du cadre de siège de gauche (4L) ;
un support (50) supporté par le cadre de siège de droite (4R) et le cadre de siège de gauche (4L) ; et
une poignée arrière (21) supportée par le support (50) ;
le support (50) comprenant :
un premier support (51) disposé entièrement derrière la totalité du siège (17), dans une vue en plan du véhicule, et relié au cadre de siège de droite (4R) ;
un deuxième support (52) disposé entièrement derrière la totalité du siège (17), dans la vue en plan du véhicule, et relié au cadre de siège de gauche (4L) ;
un troisième support (53) disposé devant le premier support (51) dans la vue en plan du véhicule et relié au cadre de siège de droite (4R) ; et
un quatrième support (54) disposé devant le deuxième support (52) dans la vue en plan du véhicule et relié au cadre du siège de gauche (4L) ;
le troisième support (53) et le quatrième support (54) étant séparés l'un de l'autre ;
la poignée (21) comprenant :
une partie de poignée de droite (31) disposée vers la droite du cadre de siège de droite (4R) et du siège (17) dans la vue en plan du véhicule et s'étendant dans la direction longitudinale (X) du véhicule ;
une partie de poignée de gauche (32) disposée vers la gauche du cadre de siège de gauche (4L) et du siège (17) dans la vue en plan du véhicule et s'étendant dans la direction longitudinale (X) du véhicule ;
une partie de couplage (33) disposée derrière le siège (17) dans la vue en plan du véhicule, s'étendant d'une extrémité arrière (31b) de la partie de poignée de droite (31) vers une extrémité arrière (32b) de la partie de poignée de gauche (32) dans une direction transversale (Y) du véhicule, reliée directement au premier support (51) et au deuxième support (52), et couplant le cadre de siège de droite (4R) au cadre de siège de gauche (4L) via le premier support (51) et le deuxième support (52) ;
une partie de jambe de droite (34) s'étendant depuis une extrémité avant (31a) de la partie de poignée de droite (31) vers le troisième support (53) et reliée au troisième support (53) ; et
une partie de jambe de gauche (35) s'étendant depuis une extrémité avant (32a) de la partie de poignée de gauche (32) vers le quatrième support (54) et reliée au quatrième support (54) ;
la partie de couplage (33) chevauchant le cadre de siège de droite (4R) et le cadre de siège de gauche (4L) dans la vue en plan du véhicule, et
la poignée arrière (21) formant un espace interne (T) configuré pour contacter un bord de gauche (31c) de la partie de poignée de droite (31), un bord de droite (32c) de la partie de poignée de gauche (32), et un bord avant (33a) de la partie de couplage (33), dans la vue en plan du véhicule, et pour s'ouvrir vers l'avant de la poignée arrière (21).

2. Véhicule à enfourcher (1) selon la revendication 1, dans lequel
le troisième support (53) s'étend vers le haut à partir du cadre de siège de droite (4R),
le quatrième support (54) s'étend vers le haut à partir du cadre de siège de gauche (4L), et
une distance de séparation (D3) entre le troisième support (53) et le quatrième support (54) dans la direction transversale (Y) du véhicule est approximativement ou sensiblement égale à une distance de séparation (D1) entre le cadre de siège de droite (4R) et le cadre de siège de gauche (4L) dans la direction transversale (Y) du véhicule.

3. Véhicule à enfourcher (1) selon la revendication 1 ou 2, dans lequel
une distance de séparation (D5) entre la partie de jambe de droite (34) et la partie de jambe de gauche (35) dans la direction transversale (Y) du véhicule est approximativement ou sensiblement égale à une distance de séparation (D1) entre le cadre de siège de droite (4R) et le cadre de siège de gauche (4L), dans la direction transversale (Y) du véhicule.

4. Véhicule à enfourcher (1) selon l'une quelconque des revendications 1 à 3, dans lequel
le premier support (51) et le deuxième support (52) sont séparés l'un de l'autre,
le premier support (51) s'étend vers le haut à partir du cadre du siège de droite (4R),
le deuxième support (52) s'étend vers le haut à partir du cadre de siège de gauche (4L), et
une distance de séparation (D2) entre le premier support (51) et le deuxième support (52), dans la direction transversale (Y) du véhicule, est approximativement égale à une distance de séparation (D1) entre le cadre de siège de droite (4R) et le cadre de siège de gauche (4L) dans la direction transversale (Y) du véhicule.

5. Véhicule à enfourcher (1) selon l'une quelconque des revendications 1 à 4, dans lequel
la partie de couplage (33) a une forme de plaque plate s'étendant dans la direction transversale (Y) du véhicule.

6. Véhicule à enfourcher (1) selon l'une quelconque des revendications 1 à 5, dans lequel
le siège (17) comprend :
un siège avant (18), et
un siège arrière (19) disposé derrière le siège avant (18),
le siège arrière (19) est séparé du siège avant (18), et
la poignée arrière comprend :
un régulateur de position (37) configuré pour contacter le siège arrière (19) pour réguler le déplacement vers le haut du siège arrière (19) par rapport à la poignée arrière (21).

7. Véhicule à enfourcher (1) selon la revendication 6, dans lequel
le régulateur de position (37) est disposé plus haut que la partie de jambe de droite (34) et la partie de jambe de gauche (35).

8. Véhicule à enfourcher (6) selon la revendication 6 ou 7, dans lequel
le régulateur de position (37) est supporté tout en étant suspendu à la partie de couplage (33), et
la partie de couplage (33) est disposée plus haut que le régulateur de position (37).

9. Véhicule à enfourcher (1) selon l'une quelconque des revendications 6 à 8, dans lequel
le siège arrière (19) comprend :
une partie d'engagement inférieure (63) disposée au-dessous du régulateur de position (37) et configurée pour contacter le régulateur de position (37).

10. Véhicule à enfourcher (1) selon la revendication 9, dans lequel
au moins la partie d'engagement inférieure (63) ou le régulateur de position (37) comprend une partie de blocage (65a, 65b) configurée pour empêcher la disposition de la partie d'engagement inférieure (63) au-dessus du régulateur de position (37).

11. Véhicule à enfourcher (1) selon la revendication 9 ou 10, dans lequel
le siège arrière (19) comprend :
une première partie de transmission de charge (71) disposée au-dessus du cadre de siège de droite (4R) et configurée pour contacter le cadre de siège de droite (4R) pour transmettre la charge au cadre de siège de droite (4R) ; et
une deuxième partie de transmission de charge (72) disposée au-dessus de cadre de siège de gauche (4L) et configurée pour contacter le cadre de siège de gauche (4L) pour transmettre la charge au cadre de siège de gauche (4L), et
la partie d'engagement inférieure (63) est disposée plus haut qu'une extrémité inférieure (71a) de la première partie de transmission de charge (71) et qu'une extrémité inférieure (72a) de la deuxième partie de transmission de charge (72).

12. Véhicule à enfourcher (1) selon l'une quelconque des revendications 9 à 11, dans lequel
le régulateur de position (37) comprend :
un premier régulateur de position (37a) et
un deuxième régulateur de position (37b) disposé vers la gauche du premier régulateur de position (37a), et
la partie d'engagement inférieure (63) comprend :
une première partie d'engagement inférieure (63a) configurée pour contacter le premier régulateur de position (37a), et
une deuxième partie d'engagement inférieure (63b) disposée vers la gauche de la première partie d'engagement inférieure (63a) et configurée pour contacter le deuxième régulateur de position (37b).

13. Véhicule à enfourcher (1) selon la revendication 12, dans lequel
le siège arrière (19) comprend un crochet (76), et
le véhicule à enfourcher (1) comprend en outre un mécanisme de verrouillage (81) configuré pour verrouiller le crochet (76),
le crochet (76) étant disposé plus à gauche et plus vers l'avant que la première partie d'engagement inférieure (63a), et
le crochet (76) étant disposé plus à droite et plus vers l'avant que la deuxième partie d'engagement inférieure (63b).

14. Véhicule à enfourcher (1) selon la revendication 13, dans lequel
le siège arrière (19) comprend :
une troisième partie de transmission de charge (73) disposée vers la droite du crochet (76) dans la vue d'en bas du véhicule, et
une quatrième partie de transmission de charge (74) disposée vers la gauche du crochet (76) dans la vue d'en bas du véhicule, et
la troisième partie de transmission de charge (73), le crochet (76) et la quatrième partie de transmission de charge (74) sont alignés dans la direction transversale (Y) du véhicule dans la vue d'en bas du véhicule, et
le véhicule à enfourcher (1) comprend en outre :
une console (46) disposée au-dessous de la troisième partie de transmission de charge (73) et de la quatrième partie de transmission de charge (74) et configurée pour contacter la troisième partie de transmission de charge (73) et la quatrième partie de transmission de charge (74).

15. Véhicule à enfourcher (1) selon l'une quelconque des revendications 6 à 14, dans lequel
le siège arrière (19) comprend :
une partie d'engagement de droite (67b) disposée vers la droite du régulateur de position (37) et configurée pour contacter le régulateur de position (37), et
une partie d'engagement de gauche (67a) disposée vers le gauche du régulateur de position (37) et configurée pour contacter le régulateur de position (37).
